# EUROPEAN PATENT SPECIFICATION

(11) **EP 4 479 772 B1**
(45) Date of publication and mention of the grant of the patent: **27.05.2026**
(21) Application number: 23710818.8
(22) Date of filing: 14.02.2023
(51) Int. Cl.: G01F 22/00, G01F 23/284, G01F 23/292, G01F 23/296, G01S 7/497, G01S 17/894, G01S 17/89, G01S 13/88, G01S 7/481, G01S 7/40

(54) **SELECTABLE-SIGNAL THREE-DIMENSIONAL FILL MONITORING SENSOR**
DREIDIMENSIONALER FÜLLÜBERWACHUNGSSENSOR MIT AUSWÄHLBAREM SIGNAL
CAPTEUR DE SURVEILLANCE DE REMPLISSAGE TRIDIMENSIONNEL À SIGNAL SÉLECTIONNABLE

(30) Priority: 14.02.2022 US 202263267946 P
(43) Date of publication of application: 25.12.2024
(73) Proprietor: Banner Engineering Corp., Minneapolis MN 55441 (US)
(72) Inventor: WISE, Ashley, Plymouth, Minnesota 55441 (US); TROSTAD, Brad, Minneapolis, Minnesota 55441 (US); EVANGER, Brent, Minneapolis, Minnesota 55441 (US)
(74) Representative: Schweiger, Martin
(86) International application number: PCT/US2023/062595
(87) International publication number: WO 2023/154963

(56) References cited:
- US-A1- 2020 191 580
- US-A1- 2020 209 399

## Description

### TECHNICAL FIELD

Various embodiments relate generally to fill metrics monitoring.

### BACKGROUND

Fill of a space may be changed during various processes. For example, a carton may be filled with packages. Products may be stacked onto a pallet (e.g., prior to transporting a shipment), or unloaded from one or more pallets (e.g., after a shipment has been received). A machining operation may fill a chip drawer. A fluid reservoir (e.g., barrel, tank, transfer tank) may, for example, be filled and drained.

A processing facility may, for example, monitor items in a space. A sensor may, for example, measure distance to an object. A sensor may, for example, generate a point cloud of multiple distances.

US 2020/191580 A1 describes a sensor-based waste collection and disposal system for geographically distributed containers. Each container is equipped with multiple sensors - such as time-of-flight cameras, radar, temperature, and motion sensors - that measure fill levels and environmental or operational data. The collected data is wirelessly transmitted to a cloud server, where it is processed using AI or machine learning algorithms to determine current and forecasted fill levels, filter erroneous data, and generate collection orders when thresholds are exceeded. The system also incorporates vehicle data, traffic and weather information to calculate optimized routes for the collection fleet. A navigation interface guides vehicles and reports operational data back to the system. Dashboards provide access to container status, historical data, and collection management.

US 2020/209399 A1 discloses a laser-based dimensioning system in which several scanning heads acquire 3-D point clouds of objects on a conveyor. For each object, a convex-hull surface is generated; points from lower hulls are virtually projected along the laser beam paths toward higher hulls. If the projections intersect or closely approach an upper hull, the lower object is classified as shadowed and a shadow event is recorded.

### SUMMARY

The invention is defined by the features of the independent claims. Advantageous embodiments of the invention are described in the dependent claims.

Apparatus and associated methods relate to a volumetric measurement system using three dimensional time of flight (3D ToF) cameras. In an illustrative example, a VMS may include at least one 3D distance sensor unit for monitoring a volume of objects in a region of interest (ROI). The VMS may, for example, include a set of user-defined parameters including the ROI, and temporal distribution of measurement attributes associated with the ROI. In some implementations, the VMS may be activated to automatically generate a set of error compensated volume metrics. For example, the VMS may apply a 3D profile, generated based on signals received from the 3D distance sensor, to an error compensation model. Based on measurement attributes generated from applying the error compensation model, the VMS may, for example, generate a set of error compensated volume metrics. Various embodiments may advantageously compensate for errors including occlusion of objects from the 3D distance sensor.

Various embodiments may achieve one or more advantages. Some embodiments may include more than one 3D distance sensor to advantageously detect uneven distribution of objects in the ROI. For example, some embodiments may advantageously provide actionable output signals that may advantageously enable decision making (e.g., immediate decision making). Some embodiments may advantageously generate field-actionable signal(s) based on pre-selected attributes and predetermined criterion(s), for example. In some embodiments, a selectable-signal fill monitoring sensor (SSFMS) may advantageously provide a single sensor that emits, detects, and processes signals to generate (actionable) output signal(s) based on user-defined (predetermined) criterion(s). Accordingly, various embodiments may advantageously enable rapid deployment, integration, fixturing, and/or replacement of 3D space fill monitoring. Such embodiments may, for example, advantageously reduce or eliminate a need for separate processing device(s) and associated wiring and/or configuration.

Various embodiments may, for example, advantageously be mounted on a robotic arm. Some such embodiments may, for example, be configured to align mass along a longitudinal axis, such as, for example, with reduced mass at a distal end.

In various embodiments, an SSFMS may, for example, advantageously be configured to generate an output signal(s) corresponding to fill level even if a bottom of the target space cannot be seen, such as, by way of example, if the bottom of the target space is outside of detection range, has insufficient surface reflectance, and/or is not a flat or horizontal surface. Some embodiments may advantageously reduce random and/or systemic noise. Such embodiments may, for example, advantageously reduce unwanted alerts from object features to be disregarded.

Some embodiments may, for example, advantageously represent a same area regardless of height. Such embodiments may, for example, advantageously avoid problems with specifying a number of pixels to ignore resulting in less area being ignored as a distance from the sensor decreases.

Some embodiments may advantageously report a gap between two boxes that is too small for another box to fit as being filled (e.g., rather than as available volume) based on predetermined minimum gap size criterion(s). Some embodiments may, for example, advantageously output a signal corresponding to a (substantially) constant area regardless of distance of a detected object(s) from the sensors. Such embodiments may, for example, advantageously avoid problems with specifying a gap size in pixels, such as an ignored gap size decreasing with increasing distance from the sensor. For example, a surface between two objects of a gap smaller than the minimum gap size criterion may be interpolated.

Various embodiments may advantageously provide volume measurement-based output. Volume measurement-based output may, for example, be more robust to a varying presence of bin walls in a field of view of the SSFMS. Various embodiments may advantageously exclude regions from container misalignment from a fill attribute output signal(s). Such embodiments may, for example, advantageously avoid undermeasuring volume within the ROI. Accordingly, such embodiments may, for example, advantageously provide increased accuracy in volume measurement. In some examples, increased accuracy may be realized in systems that may monitor a rising surface level by performing one or more operations while a bin is being actively filled. In some further examples, increased accuracy may be realized in systems that may monitor a rising surface level by performing one or more operations in the time between each object insertion into the bin. Some exemplary embodiments may monitor metrics that represent fill level and/or distribution of contents during filling operations. Some systems may monitor and report content parameters, taken alone or in combination, according to any of, for example, content distribution, package estimated count, and fill height. Some implementations may provide monitoring and reporting while contents are dynamically changing, such as being drained or emptied so as to remove contents, for example.

The details of various embodiments are set forth in the accompanying drawings and the description below. Other features and advantages will be apparent from the description and drawings, and from the claims.

### BRIEF DESCRIPTION OF THE DRAWINGS

FIG. 1A depicts an exemplary selectable-signal fill monitoring sensor (SSFMS) employed in an illustrative use-case scenario.
FIG. 1B depicts an exemplary display generated based on an output signal(s) of an exemplary SSFMS.
FIG. 2 is a block diagram depicting an exemplary SSFMS.
FIG. 3 is a flowchart illustrating an exemplary method of configuring an exemplary SSFMS.
FIG. 4 is a flowchart illustrating an exemplary method of generating an exemplary selectable fill monitoring signal(s).
FIG. 5 depicts an exemplary SSFMS in an illustrative unitary housing.
FIG. 6A, FIG. 6B, FIG. 6C, FIG. 6D, FIG. 6E, FIG. 6F, and FIG. 6G depict an exemplary sequence depicting an SSFMS deployed in an illustrative use-case scenario, and a corresponding interface depicting an illustrative display generated based on illustrative output signal(s) of the SSFMS.
FIG. 7A, FIG. 7B, FIG. 7C, FIG. 7D, FIG. 8A, FIG. 8B, FIG. 8C, FIG. 8D, FIG. 9A, FIG. 9B, FIG. 9C, FIG. 9D, FIG. 10A, FIG. 10B, FIG. 10C, and FIG. 10D depict an exemplary sequence depicting exemplary output signal values of an exemplary SSFMS over time and corresponding visual indicia generated in response to the SSFMS in an illustrative use-case scenario.

Like reference symbols in the various drawings indicate like elements.

### DETAILED DESCRIPTION OF ILLUSTRATIVE EMBODIMENTS

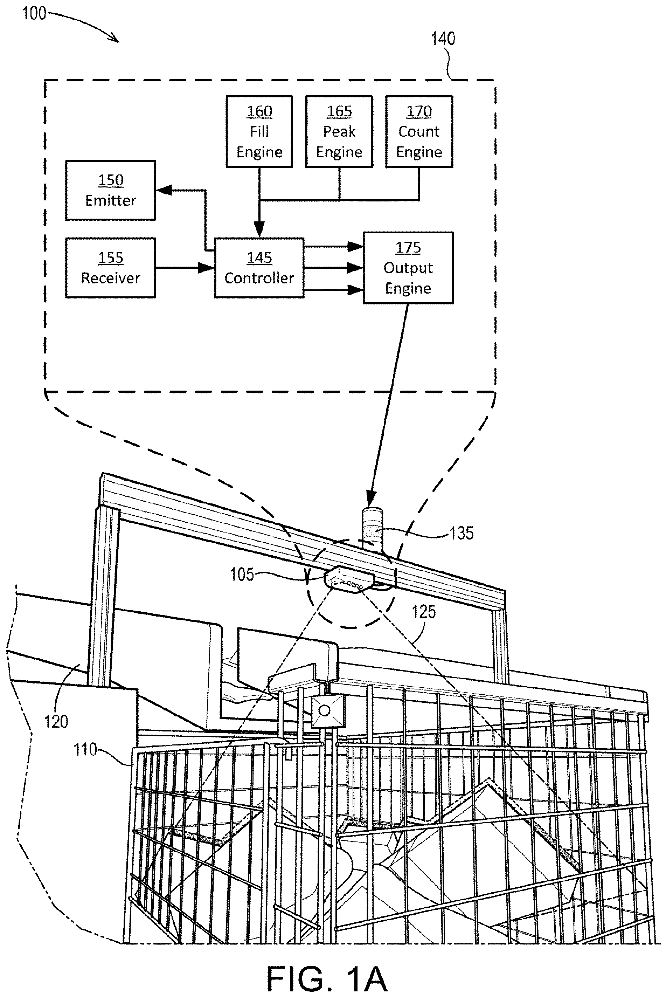

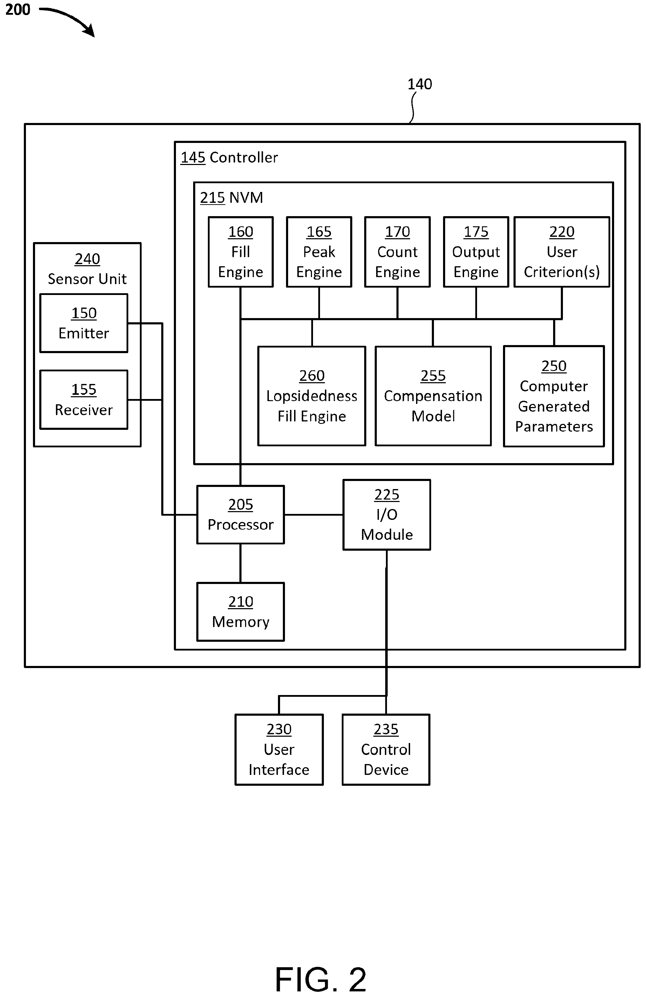

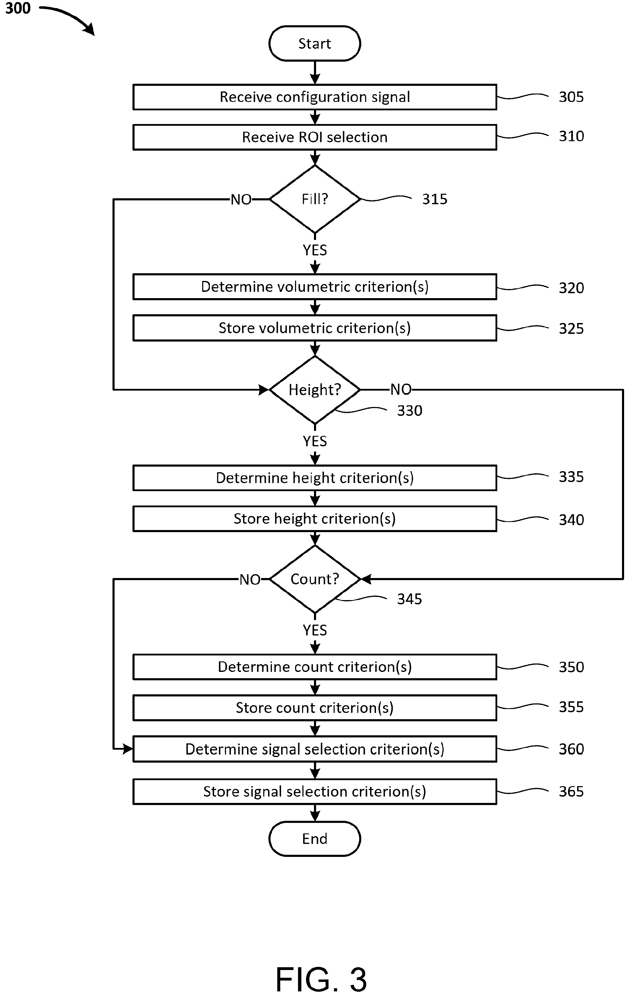

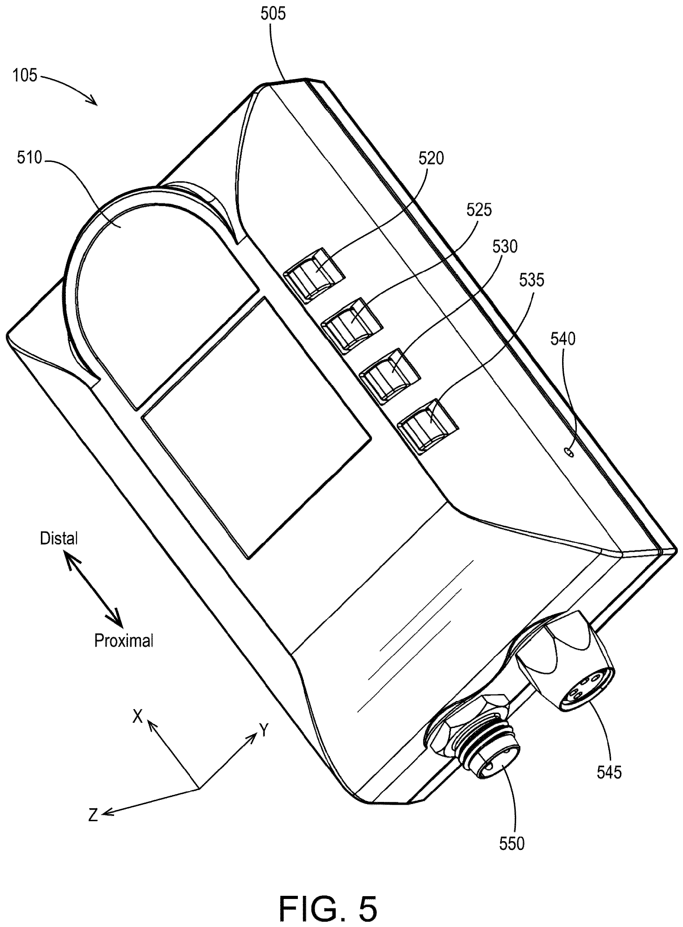

To aid understanding, this document is organized as follows. First, to help introduce discussion of various embodiments, a selectable-signal fill monitoring system (SSFMS) is introduced with reference to FIGS. 1A-1B. Second, that introduction leads into a description with reference to FIG. 2 of some exemplary embodiments of SSFMs. Third, with reference to FIGS. 3-4, exemplary methods of configuration and deployment are described in application to exemplary SSFMs. Fourth, with reference to FIGS. 5-10D, the discussion turns to exemplary embodiments that illustrate exemplary SSFMs. Finally, the document discusses further embodiments, exemplary applications and aspects relating to SSFMs.

FIG. 1A depicts an exemplary selectable-signal fill monitoring sensor (SSFMS) employed in an illustrative use-case scenario. In an illustrative fill monitoring scenario 100, a SSFMS 105 is mounted to monitor a space (e.g., volume) including at least some of a crate 110. The SSFMS 105 may, for example, be configured to monitor one or more aspects of filling the crate 110 with packages 115.

In the depicted example, the packages 115 are deposited into the crate 110 from a chute 120. The SSFMS 105 may, for example, include a time of flight (ToF) sensor. The ToF sensor may, for example, include a three-dimensional (3D) ToF sensor. In some implementations, the SSFMS 105 may include other types of 3D distance sensor (e.g., ultrasonic sensor, radio sensor).

In the depicted example, the SSFMS 105 is configured to emit an electromagnetic signal 125. The electromagnetic signal 125 may, for example, include an optical signal. The SSFMS 105 may, for example, be configured to simultaneously monitor at least one volumetric space. The SSFMS 105 may, for example, use a multi-dimensional optical signal to simultaneously monitor the space (e.g., without scanning an optical beam over the volumetric space). For example, the electromagnetic signal 125 may encompass at least an entire region of interest. In some implementations, the region of interest may be selectively defined by a user. For example, the user may configure the region of interest using a computer device operably (wirelessly) connected to the SSFMS 105.

The SSFMS 105, for example, may determine an attribute 130 (e.g., one attribute, multiple attributes) of the space (e.g., the crate 110 with respect to the packages 115). The attribute 130 may, for example, correspond to a volumetric fill of the space. The attribute 130 may, for example, correspond to a height (e.g., peak height) of the packages 115 in the crate 110. The attribute 130 may, for example, correspond to an estimated count of the packages 115 in the crate 110.

In this example, the SSFMS 105 generates a signal to an actuator 135 (e.g., a tower light). The actuator 135 may, for example, generate visual indicia in response to a signal(s) from the SSFMS 105 based on one or more measurement attributes of the crate 110 with respect to the packages 115. Accordingly, the SSFMS 105 may, for example, provide actionable output signal(s) to a user(s) and/or actuator(s). For example, The SSFMS 105 may (e.g., in a single package) advantageously provide actionable output signals that may advantageously enable decision making (e.g., immediate decision making). In some embodiments, the output signal(s) of the SSFMS 105 may be generated based on user-specified criterion(s) (e.g., fill percent, available space, max height, height difference, item count). The output signal(s) of the SSFMS 105 may, for example, not require further processing to generate an actionable signal (e.g., fill threshold(s) reached, ratios between fill attributes reached).

As depicted, the SSFMS 105 may include a housing 140. Disposed within the housing 140 is a controller 145. The controller 145 is operably coupled to an emitter 150. The emitter 150 may be disposed, as depicted, within the housing 140. The emitter 150 may, for example, emit the electromagnetic signal 125.

The controller 145 is operably coupled to a receiver 155. The receiver 155 may be disposed, as depicted, within the housing 140. The receiver 155 may, for example, be configured to generate a signal(s) in response to detecting a reflection of the electromagnetic signal 125.

The controller 145 may, as depicted, generate a plurality of signals based on, by way of example and not limitation, a fill engine 160, a peak engine 165, and/or a count engine 170. For example, the fill engine 160 may cause the controller 145 to determine, based on the signal(s) received from the receiver 155, a volumetric fill of the crate 110 with the packages 115 (e.g., volume filled, percent fill, available space). The peak engine 165 may, for example, cause the controller 145 to determine, based on the signal(s) received from the receiver 155, a height(s) of the packages 115 in the crate 110 (e.g., a peak height). The count engine 170 may, for example, cause the controller 145 to determine, based on the signal(s) received from the receiver 155, a count of item(s) (e.g., packages 115) deposited in the crate 110 (e.g., during a predetermined time window).

In some embodiments, the controller, upon receiving a signal corresponding to the volumetric space, may generate a 3D profile (e.g., a point cloud) of the packages 115 within a user-defined region of interest. For example, the point cloud may include surfaces (e.g., 3D surfaces) of the packages 115 in a direction of the 3D ToF sensor. The engines may, for example, generate the volumetric fill of the crate 110 using the point cloud. For example, when the 3D ToF sensor is occluded by one or more of the packages 115, the controller 145 may retrieve temporal distribution of attributes (TDA) (e.g., historical images, historical measurement attributes, historical volume metrics, historical volumetric fill) to compensate the occluded image captured by the 3D ToF sensor.

In some embodiments, the engines may, for example, apply predetermined user criterion(s) to the signal(s) received from the receiver 155. The fill engine 160, the peak engine 165, and/or the count engine 170 may, for example, be implemented on the controller 145.

The controller 145 processes the plurality of signals through an output engine 175. As depicted, the output engine 175 outputs at least one output signal to the actuator 135. The output engine 175 may, for example, select one or more of the plurality of signals received. The output engine 175 may, for example, generate a signal from the plurality of signal(s) based on user criterion. In some embodiments, the output engine 175 may be implemented on the controller 145.

In various implementations, the SSFMS 105 may include a processor and a 3D ToF sensor. For example, the SSFMS 105 may monitor one or more measurement attributes of a volume metric by generating a point cloud based on sensor measurement from the 3D ToF sensor. For example, a volume measurement may be generated by compensating the point cloud based on a set of user-defined parameters (e.g., the predetermined user criterion(s)) comprising a region of interest (ROI) and a set of computer-generated parameters may include a temporal distribution of attributes corresponding to the user-defined ROI, such that volume between objects that are occluded from the 3D ToF sensor.

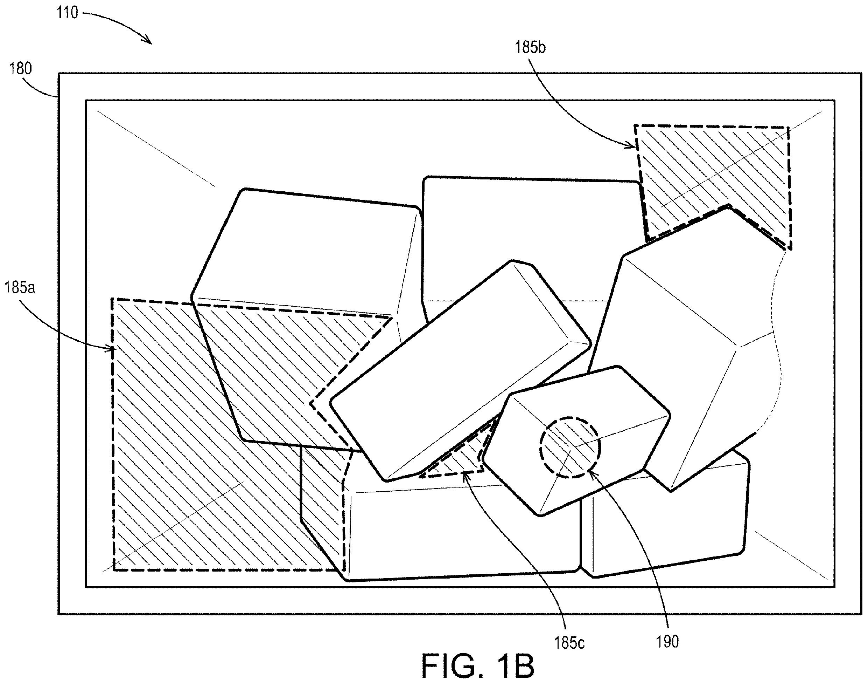

FIG. 1B depicts an exemplary display generated based on an output signal(s) of an exemplary SSFMS. In this example, a bounding box 180 defines a (predetermined) region of interest, for example, at the Cartesian boundary of the top of the "bin" or monitored area. For example, a user may define the bounding box 180 using a user interface.

In various implementations, an SSFMS may include a compensation model (e.g., used by the controller 145) to generate the volume metrics. As depicted, the compensation model may indicate an open region 185a and/or an open region 185b based on, for example, a minimum void size criterion(s) (e.g., by the fill engine 160). For example, the minimum void size criterion may be configurable by a user. For example, the minimum void size criterion may specify, for example, a minimum gap recognizable by the SSFMS. The SSFMS may, for example, not detect an open region 185c based on a minimum void size criterion(s). In some implementations, using the compensation model, the SSFMS 105 may interpolate over a gap smaller than the minimum void size criterion to generate the attribute 130.

The SSFMS may, for example, indicate a max height based on detecting a peak 190 based on, for example, a minimum height threshold and/or a minimum peak area threshold (e.g., only indicating a max height corresponding to surrounding heights being below a maximum average height offset within a minimum peak area radius from a detected maximum height point).

FIG. 2 is a block diagram depicting an exemplary SSFMS. In an exemplary SSFMS 200, a controller 145 is disposed within a housing 140. The controller 145 includes a processor 205 (e.g., one or more processors). The controller 145 is operably coupled to the emitter 150 (e.g., to cause the emitter 150 to generate an emitted signal(s)). The controller 145 is operably coupled to the receiver 155 (e.g., to receive a signal(s) corresponding to a detection reflection(s) of the emitted signal(s)).

The controller 145 is operably coupled to a memory module 210 (e.g., one or more physical and/or logical volatile memory devices, such as random-access memory (RAM)). The controller 145 is operably coupled to a storage module (an NVM 215). The NVM 215 may, for example, include one or more physical and/or logical storage devices.

The NVM 215 includes, in the depicted example, the fill engine 160, the peak engine 165, the count engine 170, and the output engine 175. For example, the engine(s) may be configured as program(s) of instructions which, when executed by the processor 205, cause the processor 205 to cause operations to be performed. The NVM 215 further includes one or more predetermined user criterion(s) 220. The user criterion(s) 220 may, for example, include criterion(s) for generating an output signal. Criterion(s) may, for example, include threshold(s) (e.g., maximum, minimum, ratio). Criterion(s) may, for example, include output type(s) (e.g., binary, value). Criterion(s) may, for example, include signal type(s) (e.g., EIP, IO-Link, Modbus, ASCII, voltage, current). Criterion(s) may, for example, include output(s) (e.g., estimated count, volume, distance). Criterion(s) may, for example, include region(s) of interest (e.g., dimensions, geometric point(s), reference point(s), region(s) to exclude). Some implementations may include two or more bins having two or more regions of interest. In some implementations, the criterion(s) 220 may also include a region of interest for generating a fill volume metric. For example, the SSFMS 200 may measure a user defined space without a physical boundary (e.g., a wooden pallet).

The processor 205 is operably coupled to an input output module (an I/O module 225). The I/O module 225 may, for example, provide hardware and/or software for wireless and/or wired communication between the controller 145 and one or more device(s). The I/O module 225 may, for example, communicate with a network. For example, the I/O module 225 may communicate with a user interface (e.g., display, input device). In the depicted example, the I/O module 225 is operably coupled to a user interface 230. The I/O module 225 may, for example, communicate with a (pluggable, removably coupled) non-transitory tangible media (e.g., compact disk, USB drive). In the depicted example, the I/O module 225 is operably coupled to a control device 235. In some embodiments, the control device 235 (e.g., as depicted with reference to actuator 135 in FIG. 1A) may generate visual indicia. In some embodiments, the control device 235 may include a control system (e.g., a programmable logic controller (PLC)). In some embodiments, the control device 235 may include actuator(s) (e.g., relays, motor controllers). In some embodiments, the control device 235 may, for example, include monitoring device(s) (e.g., sensors, logging systems). In some embodiments, the control device 235 may include a (remote) server. The SSFMS 200includes a sensor unit 240. For example, the sensor unit 240 includes the emitter 150 and the receiver 155. For example, the sensor unit 240 may be a 3D time of flight (ToF) camera. For example, the sensor unit 240 may be a 3D distance sensor.

Although various connections that represent communication paths between various elements are shown in a simplified line format for clarity, various embodiments may implement communication paths in other ways. By way of example and not limitation, any communication paths between or among described elements in FIG. 2 may be implemented separately or in combination over various physical media (e.g., traces, wire harness, cables, optical) using any desired protocols/formats (e.g., serial, parallel, encryption, compression, encoding) and suitable interfaces or connectors for each communication path.

In this example, the NVM 215 also includes computer generated parameters 250 and a compensation model 255. For example, the compensation model 255 may include functions to automatically compensate measurement from the sensor unit 240 to generate a volume metric for the ROI. For example, the compensation model 255 may discard measurement outside of the ROI. For example, the compensation model 255 may remove points from a point cloud if the points are outside of the ROI. In some implementations, the compensation model 255 may automatically calibrate the user-defined ROI to an actual boundary of a target space to compensate for slight deviations in position between the user-defined ROI on a user interface and actual location of the target space.

The SSFMS 200 includes a lopsidedness fill engine 260 in this example. In various implementations, the compensation model 255 may use the lopsidedness fill engine 260 to generate more than one set of volumetric attributes based on subregions of interest. For example, the subregions of interest may be user-defined. For example, providing volumetric attributes (e.g., volume and height) of multiple subregions of interest may advantageously quantify an uneven fill of the region of interest. For example, a left unevenness may be determined based on a ratio of percent of max height to percent of max volume. If the percent of max height is equal to the percent of max volume, for example, then contents of a ROI may be evenly distributed. For example, if percent of max volume is less than percent of max height, the contents may be unevenly distributed.

In some implementations, lopsided fill may be quantified by measuring a ratio of volumes in subregions of interests. The multiple subregions method may, for example, then be used to determine if the fill is lopsided to one side (e.g., left vs. right). For example, the lopsided fill determination may include comparing parameters between ROIs. In some implementations, by way of example and not limitation, the lopsided fill determination may include comparing height vs. volume within a single ROI. For example, the controller 145 may use the lopsidedness fill engine 260 to perform a volume measurement on both left and right sides (e.g., as two subregions of interest of a ROI) independently to determine whether the fill is left or right lopsided. In some implementations, additional subregions of interest may be defined. For example, if a region is split into subregions of the four corners, then an uneven fill may further be finely defined. In some implementations, the lopsidedness fill engine 260 may, for example, determine a location of a lopsidedness within a region of interest (e.g., right vs. left) by spatial analysis. For example, spatial analysis may include identifying density and/or clusters of height and/or volume.

In some implementations, the SSFMS 200 may monitor a fill level of the target space while the space is being actively filled using the compensation model 255. In some examples, objects being placed into the target space may, for example, temporarily occlude the previously filled items. This temporary occlusion may, for example, be compensated by the compensation model 255. For example, the SSFMS 200 may store previously (historical) attributes including point clouds of previously placed items in the computer generated parameters 250. For example, the compensation model 255 may be configured to ignore a moving item and temporarily use the historical point cloud to generate the fill metrics. In some implementations, the compensation model 255 may include a curve smoothing function to compensate object surfaces occluded from the emitter 150 or the receiver 155. Using the computer generated parameters 250, the SSFMS may, for example, advantageously be configured to generate an output signal(s) corresponding to fill level even if a bottom of the target space cannot be seen.

In some implementations, a field of view and/or dynamic range of a 3D camera (e.g., the sensor unit 240) may be limited. For example, an object closer to a camera may occlude parts of objects farther from the camera. Pixels on the edges of two different distances may, for example, generate an unreliable distance measurement. In various embodiments, the compensation model 255 may be configured to determine (e.g., and exclude) unreliable pixel data. For example, the SSFMS may include a curve smoothing function to determine the unreliable pixel data.

Areas of objects that are too reflective may, in some implementations, saturate a camera and not be measured. Areas of objects that are too dark may, for example, not return enough signal to a camera to be measured. A dynamic range may, for example, be improved by using high-dynamic-range methods, but dynamic range may be limited. Objects farther away may appear as lower signal levels than closer objects. In some implementations, the compensation model 255 may be configured to detect objects near a full height of a volume of interest may, for example, not see all objects near an empty height (e.g., a bottom of a container). In various embodiments, the compensation model 255 may, for example, be configured to estimate a height of missing and/or unreliable areas within an ROI. Such embodiments may, for example, advantageously avoid undermeasuring volume within the ROI. Accordingly, such embodiments may, for example, advantageously provide increased accuracy in volume measurement. Such embodiments may, for example, reduce limitations associated with highly reflective and/or dark objects. Various methods and apparatus for configuring dynamic range are described in PCT application serial no. PCT/US22/76604, especially with reference to FIGS. 2, 3, 8, and PCT application serial no. PCT/US22/76600, especially with reference to FIG. 15. The foregoing applications share co-inventorship with this application. This application herein incorporates the entire contents of the foregoing applications by reference.

An SSFMS (e.g., the SSFMS 200) may, for example, be configured to be placed near other sensors emitting signal(s) (e.g., visible light, IR light). In some embodiments, the compensation model 255 may, for example, include a function configured to reject crosstalk events (e.g., preventing falsely affecting fill level measurements). Such embodiments may, for example, be implemented using one or more methods including, but not limited to, sensor synchronization, start of frame dithering, crosstalk detection algorithms, or some combination thereof.

In some implementations, objects falling into a field of view of a sensor and/or temporary obstructions (e.g., a human arm) may, for example, create temporary false measurements of height and volume. In various embodiments, an SSFMS may be configured, for example, to interrupt updating of an output signal upon detection of a transitory obstruction and/or falling object (e.g., based on predetermined time and/or volume criterion(s)).

FIG. 3 is a flowchart illustrating an exemplary method of configuring an exemplary SSFMS. In a method 300, a configuration signal is received in a step 305. The configuration signal may, for example, be generated in response to a user operating an input interface. The input interface may, for example, be coupled to a SSFMS. The input interface may, for example, be integrated into an SSFMS. In some embodiments, the configuration signal may, for example, be received from another SSFMS (e.g., upon replacement and/or addition of a SSFMS to a control network). In some embodiments, the configuration signal may, for example, be received from a control device (e.g., remote controller, PLC), such as via a network (e.g., Modbus network, ethernet network, Wi-Fi network).

Next, in a step 310, a ROI selection is received. For example, the ROI selection is received from a user interface as described with reference to FIG. 1B. After receiving the ROI selection, if it is determined, in a decision point 315, that the configuration signal does not correspond to a fill configuration (e.g., criterion corresponding to a fill engine such as fill engine 160), the method 300 proceeds to a decision point 330. If the configuration signal corresponds to a fill configuration, the method 300 proceeds to a step 320 to determine volumetric criterion(s) based on the received signal. A volumetric criterion may, for example, include a fill volume threshold (e.g., volume value, percent filled). The volumetric criterion(s) are then stored in a step 325.

If it is determined, in the decision point 330, that the configuration signal does not correspond to a height configuration (e.g., criterion corresponding to a peak engine such as peak engine 165), the method 300 proceeds to a decision point 345. If the configuration signal corresponds to a height configuration, the method 300 proceeds to a step 335 to determine height criterion(s) based on the received signal. The determined height criterion(s) are stored in a step 340.

A height criterion may, for example, include a peak height threshold. A height criterion may, for example, include a minimum area and/or volume for detecting a peak.

As an illustrative example, a first height criterion threshold may, for example, be associated with an 'almost filled' state (e.g., associated with triggering an informational feedback, such as a light change of the actuator 135). A second height criterion threshold in combination with a minimum percent filled threshold may, for example, be associated with a 'inspection' state (e.g., associated with triggering a visual and/or audible signal such as of the actuator 135, associated with stopping an automatic conveyor). A third height criterion threshold may, for example, be associated with an 'overfilled' state (e.g., associated with triggering warning feedback, such as via the actuator 135).

In some embodiments, the height criterion(s) may, for example, correspond to distance in an at least partially non-vertical direction. For example, in some embodiments, a SSFMS may be configured to monitor a space in a substantially horizontal configuration (e.g., a tunnel, a carton with a side opening). A height criterion may, for example, correspond to a distance (e.g., from the sensor).

If it is determined, in the decision point 345, that the configuration signal does not correspond to a count criterion(s) (e.g., criterion corresponding to a count engine such as the count engine 170), the method 300 proceeds to a step 360. If the configuration signal does correspond to a count criterion(s), then the count criterion(s) is determined in a step 350. For example, the count criterion(s) may include a time of motion detected threshold. The count criterion(s) may include, for example, a distance change threshold (e.g., per unit time). The count criterion(s) may include, for example, a quantity threshold. The determined count criterion(s) is stored in a step 355.

A signal selection criterion(s) is determined, in a step 360, from the configuration signal and stored in a step 360. In some embodiments, the signal selection criterion(s) may, for example, at least partially be used to determine an output signal. The signal selection criterion(s) may, by way of example and not limitation, be applied by an output engine (e.g., the output engine 175). In some embodiments, the signal selection criterion(s) may, for example, determine whether an output signal is associated with a fill attribute. In some embodiments, the signal selection criterion(s) may, for example, determine whether an output signal is associated with a height attribute. In some embodiments, the signal selection criterion(s) may, for example, determine whether an output signal is associated with a count attribute. In some embodiments, the step 360 and/or the step 365 may, for example, be performed based on determining whether the signal corresponds to a signal selection criterion(s).

Accordingly, various embodiments may enable a SSFMS (e.g., a unitary SSFMS such as the SSFMS 105 disclosed at least with reference to FIG. 1A) to be configured (e.g., dynamically). The method 300 may, for example, be (at least partially) executed by a processor (e.g., the processor 205 as disclosed at least with reference to FIG. 2).

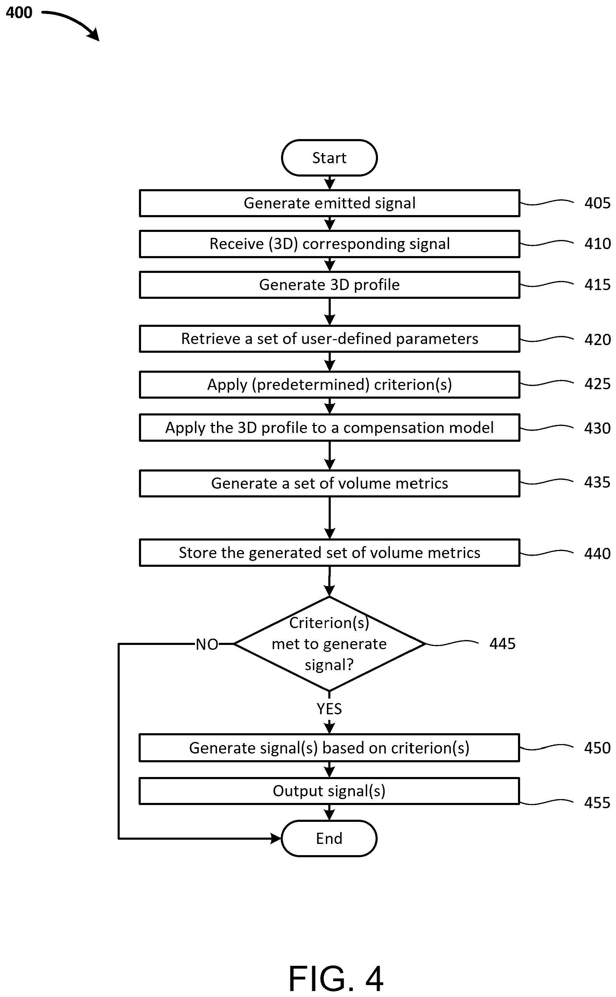

FIG. 4 is a flowchart illustrating an exemplary method of generating an exemplary selectable fill monitoring signal(s). In a method 400, an emitted signal is generated in a step 405. The emitted signal may, as an illustrative example, be generated by the emitter 150 disclosed at least with reference to FIGS. 1-2 in response to a signal from the controller 145. A reflected signal (e.g., reflected such as shown in FIG. 1, direct such as in opposed mode) is received in a step 410. The signal may, as depicted, for example, correspond to a 3D space. In step 415, a system, such as the SSFMS 105, for example, performs operations to transform the received reflected signal to generate a 3D profile as a function of the received signal(s). For example, the 3D profile may include a point cloud (e.g., of distances). In some embodiments, a time-dependent profile (e.g., change in distance over time) may be generated (not shown). In some implementations, the step 415 may generate a set of 3D points. In step 420, a set of user-defined parameters is retrieved. For example, the set of user-defined parameters may include a region of interest for measuring the volume of the objects, and a (predetermined) criterion(s). For example, the (predetermined) criterion(s) may include a set of predetermined fill level warning criterion comprising a volumetric criterion, a height criterion, and a count criterion. In some implementations, computer generate parameters (e.g., the computer generated parameters 250) may also be retrieved.

In a step 425, a (predetermined) criterion(s) is applied to the signal and/or the profile. The criterion(s) may be applied, by way of example and not limitation, by a controller (e.g., controller 145 such as using the fill engine 160, the peak engine 165, the count engine 170, and/or the output engine 175). In step 430, the 3D profile is applied to a compensation model. For example, the 3D profile is applied to the compensation model 255. For example, the compensation model may include a set of user-defined parameters and a set of computer-generated parameters (e.g., historical volumetric measurement attributes). Next, a set of volume metrics is generated. For example, the set of volume metrical may include a fill level measurement, a height measurement, and a total count of items in step 435. For example, the set of volume metrics may correspond to the signal selection criterions configured as described with reference to FIG. 3. In step 440, the set of volume metrics are stored. For example, the set of volume metrics may be stored in the computer generated parameters 250 to update a historical volumetric measurement database.

If it is determined, in a decision point 445, that criterion(s) are met corresponding with generating an output signal, then the method 400 proceeds to a step 450. For example, a comparison between the criterion(s) and the set of volume metrics are made. Otherwise, the method 400 ends. For example, it may be determined that no attribute has reached a predetermined output signal criterion(s). As an illustrative example, a user may have configured a SSFMS to only output a signal when a minimum count threshold has been reached, a minimum volume has been reached, and/or a minimum peak height has been reached. Accordingly, in various embodiments, a SSFMS may advantageously output a signal only when (predetermined) user criterion(s) are met.

At the step 450, an output signal(s) is generated in a step 450, based on the (predetermined) criterion(s), and output (e.g., transmitted, stored, emitted) in a step 455.

The method 400 may, for example, be (at least partially) executed by a processor (e.g., the processor 205 as disclosed at least with reference to FIG. 2). In some implementations, the method 400 may be operated to perform a limited number of steps, such as single step, under the control of a user. In some implementations, the user may manually modify the flow of the steps. In some implementations, the method 400 may automatically be repeated in a loop fashion for continuous operation mode.

FIG. 5 depicts an exemplary SSFMS in an illustrative unitary housing. The SSFMS 105, as depicted, is provided with a housing 505 (e.g., corresponding to the housing 140). A receiver lens 510 may, for example, cover a receiver(s) (e.g., the receiver 155). An emitter lens 515 may, for example, cover an emitter (e.g., the emitter 150). In some embodiments, by way of example and not limitation, the receiver lens 510 and/or the emitter lens 515 may be configured as an edge pass filter. By way of illustrative example, some edge pass filters may be configured as anti-scratch and/or provide environmental sealing.

A power indicator 520 indicates, for example, operational status (e.g., on, active, error). A first status indicator 525 and a second status indicator 530 may, for example, be configured (e.g., user selectably, reconfigurably, adjustably) to display a status of a (predetermined) attribute and/or combination of attributes. As an illustrative example, the first status indicator 525 may be configured to generate a first visual indicium in response to a height threshold being reached. The first status indicator 525 may, for example, be configured to generate a second visual indicium in response to a volumetric fill threshold being reached (e.g., in combination with the height threshold). The second status indicator 530 may, for example, be configured to generate a third visual indicium in response to a count threshold being reached. A network indicator 535 may, for example, indicate a status of a network connection (e.g., wireless, wired) to the SSFMS 105. Accordingly, various embodiments may advantageously enable an operator to rapidly determine a current status and/or to rapidly troubleshoot the SSFMS 105.

The housing 505 is provided with a vent 540. The vent 540 may, by way of example and not limitation, include a gas-permeable, liquid-impermeable vent membrane (e.g., Gore-Tex, available through W.L. Gore & Assoc., Newark, DE). The vent 540, along with one or more other vents (not shown) that may be provided, may, for example, allow moisture to escape (e.g., as water vapor) and/or preventing moisture from entering (e.g., as liquid membrane) the housing 505 and/or components housed in the housing 505 (e.g., when the SSFMS 105 is subjected to changing environmental conditions such as in an unconditioned warehouse). Some implementations may include one or more vents, some of which may be configured to be field replaceable.

The SSFMS 105 is provided with a first connector 545 and a second connector 550. The connectors may, for example, be operably coupled to a controller (e.g., the controller 145), such as through an I/O module (e.g., the I/O module 225). In various embodiments, for example, the SSFMS 105 may be coupled in-line in a network. In some embodiments, for example, the SSFMS 105 may be coupled to a network via a first connector and a (dedicated) output device (e.g., a lighting device, such as depicted in FIG. 1) through a second connector.

In the depicted example, the indicators (power indicator 520, first status indicator 525, second status indicator 530, and network indicator 535) are located substantially in a middle portion (e.g., in an x and y direction, as depicted) of the housing 505. Accordingly, the indicators may advantageously be easily visible when a back of the SSFMS 105 is mounted to a surface (e.g., as depicted in FIG. 1). In some implementations, such as where indicators are not specified or required, some embodiments may be configured to selectively disable or enable some or all of the indicators, such as the indicators 520-535.

As depicted, the housing 505 is configured in an elongated shape which may, for example, advantageously mount to a flat surface. The housing 505 may, for example, have reduced projection from a mounting surface as compared to traditional photoelectric (e.g., ToF) sensors. In some embodiments (such as depicted), by way of example and not limitation, a z-axis depth of the housing 505 may, for example, be less than a y-axis width and/or an x-axis length.

In the depicted example, the receiver lens 510 (e.g., corresponding to a receiving element) is mounted substantially at an end of the housing 505 (e.g., an x-axis extrema, as depicted). In various embodiments, such as depicted, the receiver may, for example, be mounted (substantially) on a distal end of the SSFMS 105. Connectors (e.g., the first connector 545, the second connector 550) may be mounted (substantially) at a proximal end of the SSFMS 105. Such embodiments may, for example, advantageously be mounted on a robotic arm. The cables may, for example, extend along a longitudinal (e.g., x) axis of the housing 505, reducing mass at the end of the robotic arm. The receiver may, being at or near the distal end of the housing 505 and/or distal to the emitter, receive greater visibility (e.g., than being in a center) while reducing mass at the end of the robotic arm. For example, emitter circuit(s), processing circuit(s), controller circuit(s), and/or communication circuit(s) may be proximal to the receiver.

In various embodiments the housing 505 may, for example, be configured to exclude dust and/or moisture. For example, the housing 505 may be sealed sufficient to achieve an IP65 rating. In some embodiments, the housing 505 may, for example, be sealed sufficiently to achieve an IP67 rating. Some embodiments may be rated to withstand a predetermined level of shock and vibration (e.g., up to at least about 100 G or more).

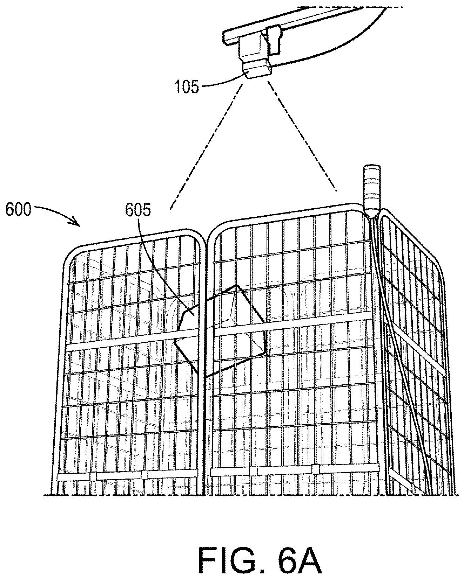

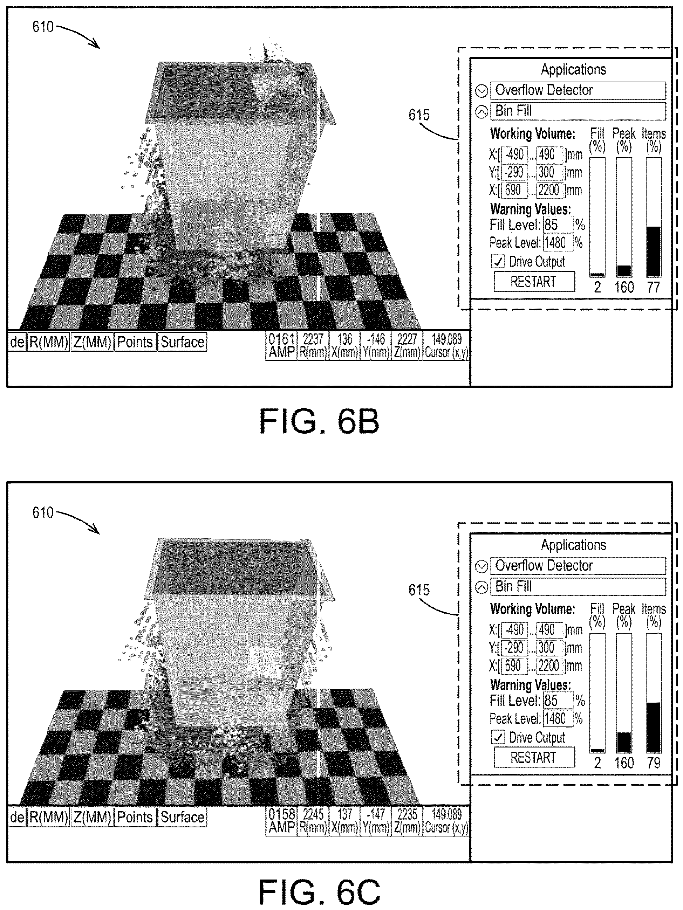

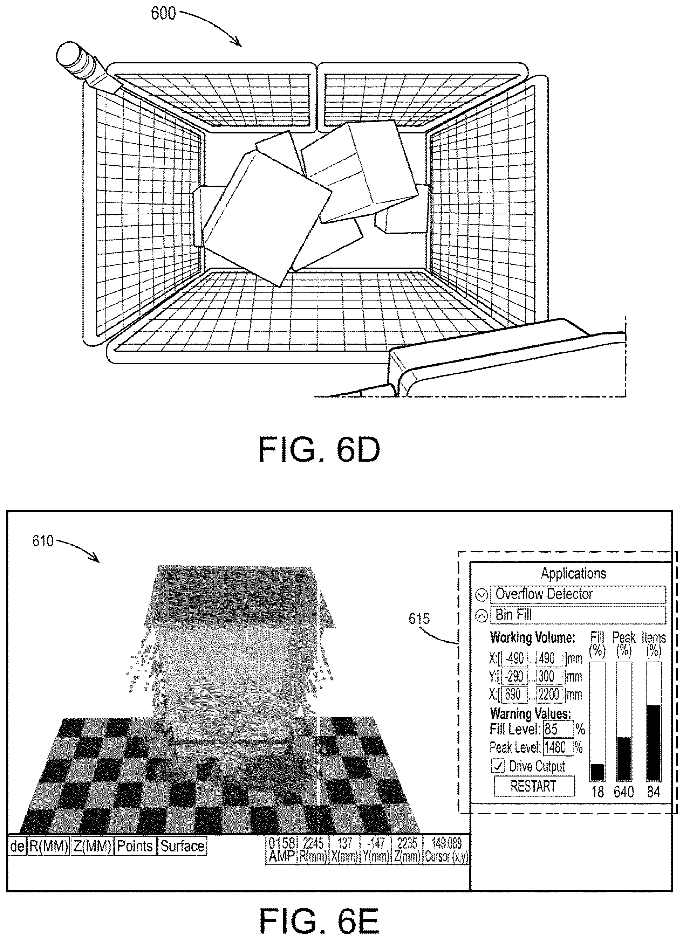

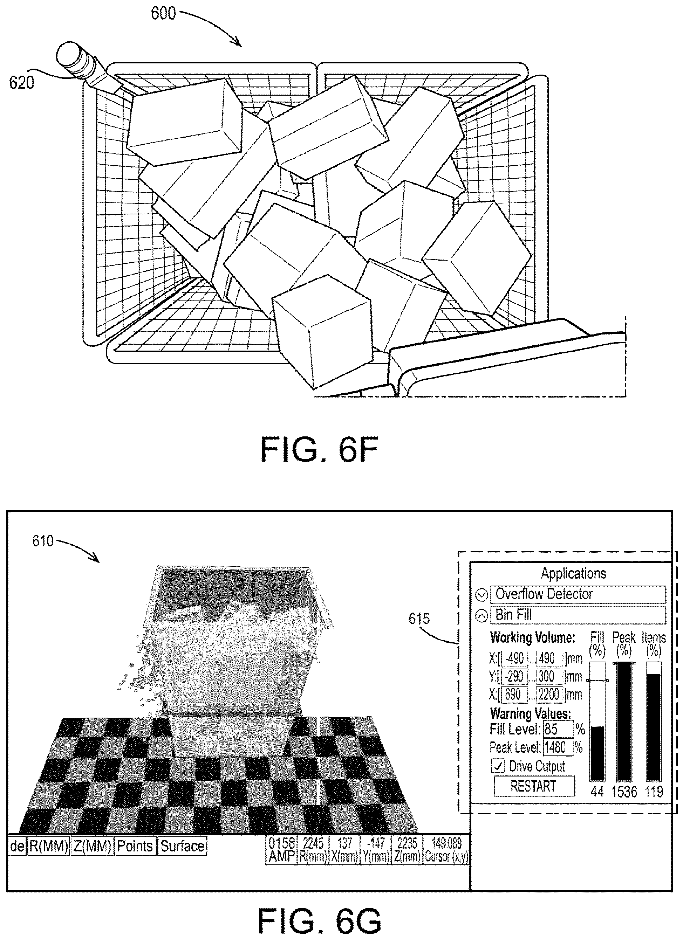

FIG. 6A, FIG. 6B, FIG. 6C, FIG. 6D, FIG. 6E, FIG. 6F, and FIG. 6G depict an exemplary sequence depicting an SSFMS deployed in an illustrative use-case scenario, and a corresponding interface depicting an illustrative display generated based on illustrative output signal(s) of the SSFMS. As shown in FIG. 6A, a package 605 is being dropped into a crate 600. As shown, the crate 600 is monitored by the SSFMS 105. FIG. 6B shows an exemplary computer generated interface corresponding to FIG. 6A. As shown, a 3D image 610 is generated. For example, the 610. may be generated based on multiple (e.g., four) unique modulation frequency images. For example, the SSFMS 105 may use an indirect time-of-flight method using four frames of capture representing different phases that are then combined into an amplitude and radial distance image.

The radial distance image may, for example, then be converted to a Cartesian (X,Y,Z) image. Generating the 3D image 610 (e.g., a X,Y,Z image, a point cloud) may, for example, include one or more compensation and/or calibration steps. Such step(s) may, for example, linearize point cloud values and/or increase accuracy (e.g., across a wide range of material types and reflectance).

In the illustrative example, once the 3D point cloud is generated, a subset of points may be determined which represents a 3D space inside a region of interest (e.g., container, bin, general desired fill volume). For example, the subset of points may be achieved by removing points falling outside of a user specified 3D region of interest (e.g., container, bin). The region of interest may, for example, be specified by a user. The region of interest may, for example, be determined by a sensor via a teach operation. In some embodiments, container walls may be present in the region of interest. In some embodiments, a portion of volume from a target (e.g., container, bin, space) may be excluded, but the sensor may still operate suitably for a corresponding application.

An SSFMS may, for example, be configured such that Z values increase as an object is farther from the camera. In some embodiments, a Z direction (e.g., outputted, displayed) may, for example, be reversed (e.g., for ease of understanding). Accordingly, for example, a bottom of a container Z.min = 0mm, and a top of the container Z.max= container height. A series of signal processing steps may, for example, be applied to the 3D point cloud and/or depth map to (repeatedly, constantly) determine the effective fill level of the container.

As shown, a fill level may, for example, be represented by several attributes in a fill display panel 615. In this example, the fill display panel 615 includes a fill percentage attribute, a peak

(height) attribute, and an item count. In other examples, the fill display panel 615 may include a tallest height, an average height, a volume, or some combination thereof. Such values may, for example, be represented in real units of measurement. In some embodiments, output signals may, for example, correspond to percentages. Output signals may be configured such that corresponding values count up (e.g., filled volume) and/or count down (e.g., remaining volume). The fill display panel 615 may also include parameters defining the ROI based on a X, Y, Z range of working volume. As shown, a user may input a desired criterion for warning values in fill level percentage and a peak height.

As shown in FIG. 6C, the fill display panel 615 is updated with additional item count. In this example, the fill percentage attribute remains unchanged because the height of the total volume in the crate 600 does not change. FIGS. 6D-6E show the crate 600 and the 3D image 610 after more packages 605 are loaded. As shown, the volume metrics in the fill display panel 615 are continued to be updated. FIGS. 6F-6G show the crate 600 filled to close to a top of the crate 600. As shown in FIG. 6G, the peak height (1536mm) is over the specified user criterion of 1480mm. As shown in FIG. 6F, a tower light 620 is activated because the peak height exceeds the warning level.

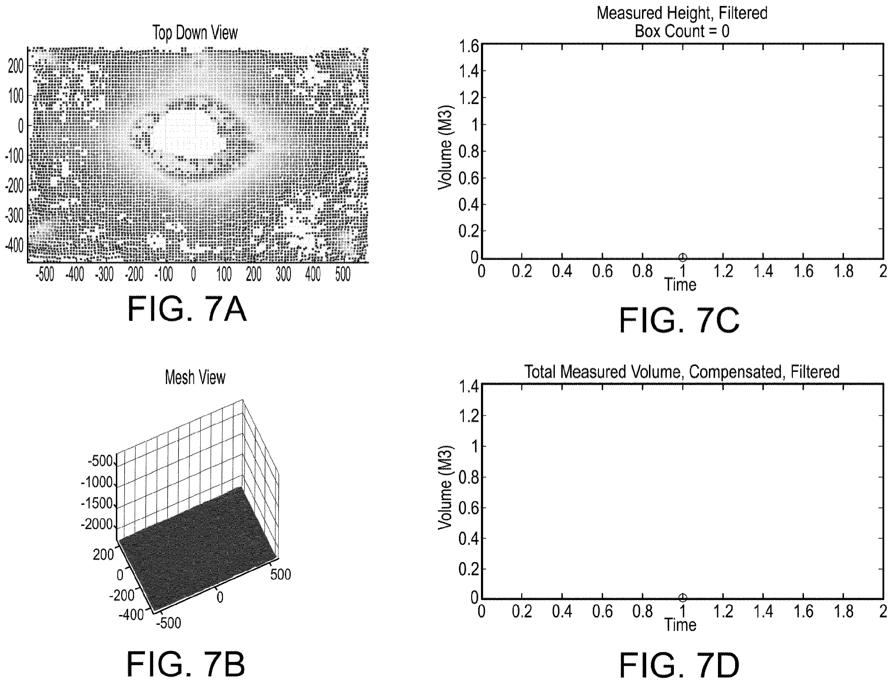

FIG. 7A, FIG. 7B, FIG. 7C, FIG. 7D, FIG. 8A, FIG. 8B, FIG. 8C, FIG. 8D, FIG. 9A, FIG. 9B, FIG. 9C, FIG. 9D, FIG. 10A, FIG. 10B, FIG. 10C, and FIG. 10D depict an exemplary sequence depicting exemplary output signal values of an exemplary SSFMS over time and corresponding visual indicia generated in response to the SSFMS in an illustrative use-case scenario.

FIGS. 7A-7D show an exemplary ROI at an initialized state. For example, the ROI may be defined by a user using an interface as described with reference to FIGS. 6A-G. FIG. 7A shows an exemplary top-down view received from, for example, a 3D ToF camera. FIG. 7B shows an exemplary mesh view generated based on the top-down view. For example, the mesh view may be generated by applying the point cloud to a compensation model. FIG. 7C shows a max height measurement derived from the mesh view. FIG. 7D shows a compensated measured volume. As it is an initial state, both FIGS. 7C-7D show the height measurement and volume to be zero.

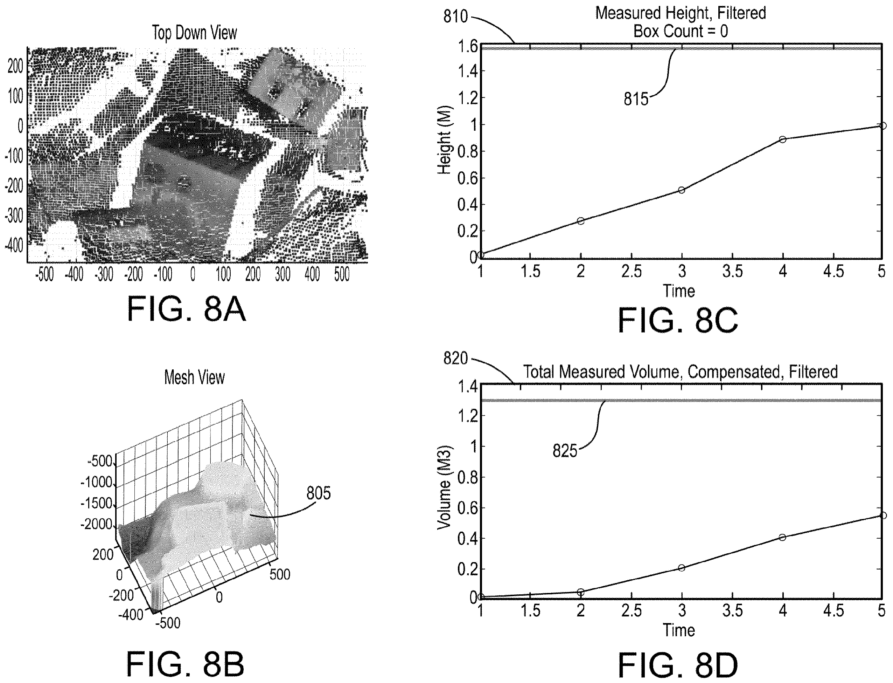

FIGS. 8A-8D show the ROI after 5 units of time in an exemplary illustrative scenario. As shown in FIG. 8A, a top view shows that a number of objects are disposed into the ROI. Based on sensor data, for example, the SSFMS 105 may generate a mesh view shown in FIG. 8B including an estimated top surface 805 of the object currently in the ROI. For example, the SSFMS 105 may interpolate the surface through gaps between objects when the gaps are smaller than a minimum void threshold. For example, the SSFMS 105 may apply a curve smoothing function using the compensation model 255 to a received image.

As shown in FIGS. 8C-D, historical attributes of the ROI are displayed. As shown in FIG. 8C, a height measurement graph 810 includes a height criterion 815. For example, the height criterion 815 may be determined in the step 335 of the method 300. For example, a measured height displayed in the height measurement graph 810 may be generated by filtering a top down view image. As shown in FIG. 8D, a volume measurement graph 820 includes a volumetric criterion 825. For example, the volumetric criterion 825 may be determined in the step 320 in the method 300. For example, a measured value displayed in the height measurement graph 820 may be generated by filtering a top down view image and compensated using the compensation model 255.

In some implementations, the height measurement graph 810 and the volume measurement graph 820 may be generated based on historical measurements attributes. For example, the SSFMS 105 may store/update a historical measurement attribute database during active filling of the ROI. In some implementations, the compensation model 255 may use the historical measurement attributes to perform error compensation functions as described with reference to FIGS 2-4.

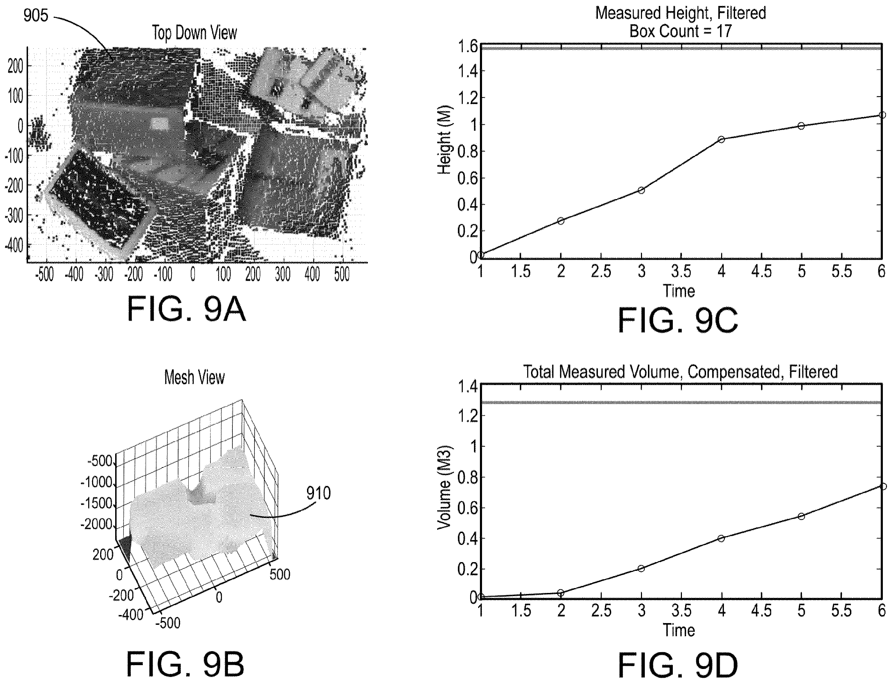

FIGS. 9A-9D show the ROI after 6 units of time in an exemplary illustrative scenario. As shown in FIG. 9A and 9C, a maximum height of objects in the ROI increased. For example, some of the objects 905 close to a sensor unit (e.g., a 3D ToF camera, the sensor unit 240) may be occluding part or all of one or more objects further away from the sensor unit. For example, the SSFMS 105 may apply the compensation model 255 to account for the occluded objects. In some implementations, the compensation model 255 may use the computer generated parameters 250 including TDA for compensate the occluded objects. Accordingly, for example, the SSFMS 105 may advantageously compensate for errors induced by occlusion of objects from the sensor unit. For example, a total measured volume, as shown in FIG. 9D, may account for gaps and voids beneath a top surface 910 as shown in FIG. 9B.

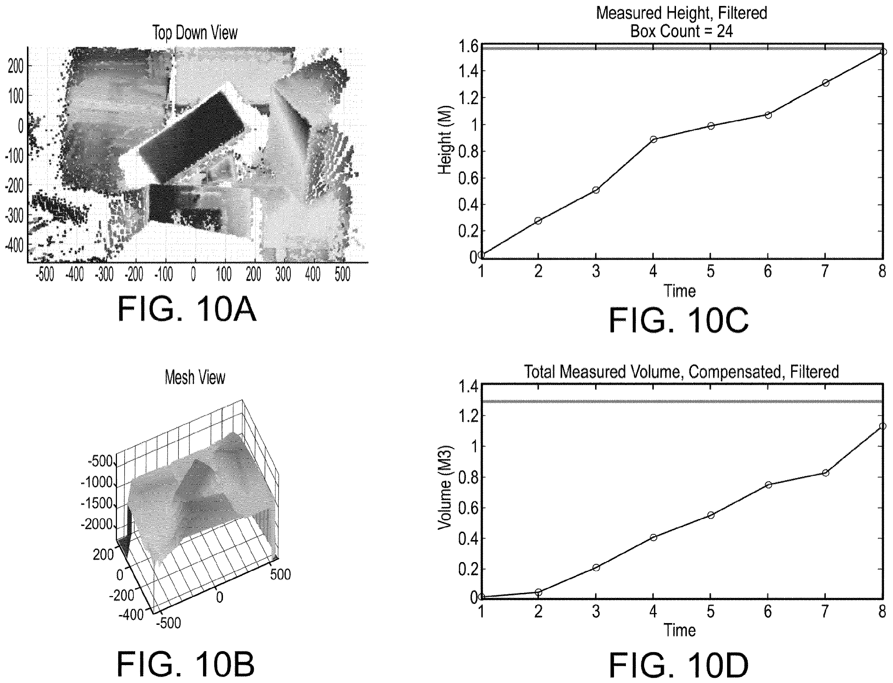

FIGS. 10A-D show the ROI after 9 units of time in an exemplary illustrative scenario. In the illustrative scenario, a peak of objects in the ROI reached the height criterion 815. For example, the SSFMS 105 may generate an output signal (e.g., at the step 455 in FIG. 4) to actuate a tower light (e.g., the tower light 620, the actuator 135). For example, the output signal may notify a user to clear the ROI (e.g., by removing the filled crate with an empty crate, redefined the ROI).

Although various embodiments have been described with reference to the figures, other embodiments are possible. For example, although an exemplary system has been described with reference to FIGS. 1-10D, other implementations may be deployed in other industrial, scientific, medical, commercial, and/or residential applications.

In various embodiments, spaces may be filled during various processes. A SSFMS may, for example, be configured to monitor fill attributes in various processes. For example, an SSFMS may be configured to monitor a carton being filled with packages. An SSFMS may be configured, for example, to monitor products being stacked and/or unstacked from a pallet (e.g., without sides). An SSFMS may, for example, be configured to monitor fluid level in a barrel in which sufficient surface reflectance is obtained, such as by a floating object (e.g., mat) or fluid surface (e.g., surface of a slurry).

In various embodiments, by way of example and not limitation, an SSFMS may include at least one 3D TOF imager. The SSFMS may, for example, be provided with a modulated 850nm VCSEL illuminator(s). A controller may, for example, be configured with container fill and level algorithms.

In various embodiments, an SSFMS may, for example, use a 3D sensor (e.g., emitter(s), receiver(s)). For example, an SSFMS may include a stereo camera(s). An SSFMS may, for example, include a structured light triangulation sensor(s). An SSFMS may, for example, be configured to implement beam steering. In some embodiments, for example, an SSFMS may include a direct and/or indirect TOF sensor(s).

In various embodiments, an SSFMS configured for indirect 3D detection may, for example, use two or more capture phases. Such embodiments may, for example, balance more phases (e.g., improving accuracy) with speed (e.g., more phases may slow down a frame rate).

In various embodiments, SSFMS container fill and/or level algorithms may be configured to work with a variety of illumination options. For example, an SSFMS may illuminate a monitored space via LED(s). An SSFMS may, for example, illuminate a monitored space using laser(s) (e.g., vertical-cavity surface-emitting laser (VCSEL), edge emitting laser (EEL)). An emitter (e.g., including an illuminator) may, for example, emit in one or more visible and/or infrared wavelengths.

In various embodiments, measurement values and/or corresponding reductions may be continuously made available for export using user-desired output forms. Output forms may, for example, correspond to industry standard output signal types. Output forms may include, by way of example and not limitation, discrete, analog, and/or pulse-frequency modulation. Various embodiments may be configured, for example, to communicate using, by way of example and not limitation, serial, industrial protocols, Modbus, and/or IO-Link.

In some embodiments, an SSFMS may be configured to return a height of a closest pixel/point cloud value within a region of interest (ROI). However, the sensor may be subject to random noise (e.g., dust particles in a field of view) and/or systemic noise (e.g., part of a chute, other sensor in the field of view). A customer may wish, for example, to exclude a height of box corners and/or other small features of measured objects. In various embodiments, an SFMSS may advantageously generate and/or store criterion(s) based on user input. For example, a user may specify an area and/or number of pixels to ignore when computing height measurements. Such embodiments may advantageously reduce random and/or systemic noise. Such embodiments may, for example, advantageously reduce unwanted alerts from object features to be disregarded.

A number of pixels for a unit area may be different at different heights. In some embodiments, an SSFMS may generate a height-independent space criterion(s) based on user input. As an illustrative example, a height-independent space criterion may include a distance-dependent pixel area. For example, a user may define an area criterion (e.g., ROI, rejection area, area threshold) as a measurement unit of area (e.g., square feet, square inches, square centimeters). The SSFMS may, for example, automatically determine pixels to ignore based on a (current) height (e.g., distance) measurement associated with pixel(s). Such embodiments may, for example, advantageously represent a same area regardless of height. Such embodiments may, for example, advantageously avoid problems with specifying a number of pixels to ignore resulting in less area being ignored as a distance from the sensor decreases.

In some embodiments, a fill volume measurement may be provided. However, a simple fill volume measurement may be configured for a user to specify an area of gap to report as full in a volume measurement output signal. For example, an SFMSS may be configured to exclude volumes which are unusable to the user based on the (predetermined) criterion(s). For example, such embodiments may advantageously report a gap between two boxes that is too small for another box to fit as being filled (e.g., rather than as available volume) based on predetermined minimum gap size criterion(s).

Various embodiments may, for example, enable a user to specify a gap area as a measurement unit of area. Such embodiments may, for example, advantageously represent the same area regardless of height. Accordingly, such embodiments may advantageously avoid problems with specifying a gap size in pixels, such a gap size ignored varying with distance from the sensor.

Various embodiments may advantageously provide volume measurement-based output. Volume measurement-based output may, for example, be more robust to a varying presence of bin walls in a field of view of the SSFMS. Accordingly, various embodiments may advantageously reduce problems with fill height measurements not being robust to an inexact region of interest. For instance, if a bin is misaligned with the ROI, edges or walls of the bin may be 'seen' within the ROI. Various embodiments may advantageously exclude such regions from a fill height (e.g., based on no corresponding change in volume detected).

In some embodiments, an SSFMS may, by way of example and not limitation, be configured to generate a (3D) point cloud(s) using a scanning-beam. In some embodiments, an SSFMS may include, for example, liquid crystal on silicon (LCoS) projection. In some embodiments, an SSFMS may include, for example, phased-array 3D sensor(s) (e.g., ultrasonic). In some embodiments, an SSFMS may include, for example, addressable VCSELs. In some embodiments, an SSFMS may include, for example, rotating mirrors.

In various embodiments, some bypass circuits implementations may be controlled in response to signals from analog or digital components, which may be discrete, integrated, or a combination of each. Some embodiments may include programmed, programmable devices, or some combination thereof (e.g., PLAs, PLDs, ASICs, microcontroller, microprocessor), and may include one or more data stores (e.g., cell, register, block, page) that provide single or multi-level digital data storage capability, and which may be volatile, non-volatile, or some combination thereof. Some control functions may be implemented in hardware, software, firmware, or a combination of any of them.

Computer program products may contain a set of instructions that, when executed by a processor device, cause the processor to perform prescribed functions. These functions may be performed in conjunction with controlled devices in operable communication with the processor. Computer program products, which may include software, may be stored in a data store tangibly embedded on a storage medium, such as an electronic, magnetic, or rotating storage device, and may be fixed or removable (e.g., hard disk, floppy disk, thumb drive, CD, DVD).

Although an example of a system, which may be portable, has been described with reference to the above figures, other implementations may be deployed in other processing applications, such as desktop and networked environments.

Temporary auxiliary energy inputs may be received, for example, from chargeable or single use batteries, which may enable use in portable or remote applications. Some embodiments may operate with other DC voltage sources, such as 9V (nominal) batteries, for example. Alternating current (AC) inputs, which may be provided, for example from a 50/60 Hz power port, or from a portable electric generator, may be received via a rectifier and appropriate scaling. Provision for AC (e.g., sine wave, square wave, triangular wave) inputs may include a line frequency transformer to provide voltage step-up, voltage step-down, and/or isolation.

Although particular features of an architecture have been described, other features may be incorporated to improve performance. For example, caching (e.g., L1, L2, ...) techniques may be used. Random access memory may be included, for example, to provide scratch pad memory and or to load executable code or parameter information stored for use during runtime operations. Other hardware and software may be provided to perform operations, such as network or other communications using one or more protocols, wireless (e.g., infrared) communications, stored operational energy and power supplies (e.g., batteries), switching and/or linear power supply circuits, software maintenance (e.g., self-test, upgrades), and the like. One or more communication interfaces may be provided in support of data storage and related operations.

Some systems may be implemented as a computer system that can be used with various implementations. For example, various implementations may include digital circuitry, analog circuitry, computer hardware, firmware, software, or combinations thereof. Apparatus can be implemented in a computer program product tangibly embodied in an information carrier, e.g., in a machine-readable storage device, for execution by a programmable processor; and methods can be performed by a programmable processor executing a program of instructions to perform functions of various embodiments by operating on input data and generating an output. Various embodiments can be implemented advantageously in one or more computer programs that are executable on a programmable system including at least one programmable processor coupled to receive data and instructions from, and to transmit data and instructions to, a data storage system, at least one input device, and/or at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, which may include a single processor or one of multiple processors of any kind of computer. Generally, a processor will receive instructions and data from a read-only memory or a random-access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including, by way of example, semiconductor memory devices, such as EPROM, EEPROM, and flash memory devices; magnetic disks, such as internal hard disks and removable disks; magneto-optical disks; and CD-ROM and DVD-ROM disks. The processor and the memory can be supplemented by, or incorporated in, ASICs (application-specific integrated circuits).

In some implementations, each system may be programmed with the same or similar information and/or initialized with substantially identical information stored in volatile and/or non-volatile memory. For example, one data interface may be configured to perform auto configuration, auto download, and/or auto update functions when coupled to an appropriate host device, such as a desktop computer or a server.

In some implementations, one or more user-interface features may be custom configured to perform specific functions. Various embodiments may be implemented in a computer system that includes a graphical user interface and/or an Internet browser. To provide for interaction with a user, some implementations may be implemented on a computer having a display device. The display device may, for example, include an LED (light-emitting diode) display. In some implementations, a display device may, for example, include a CRT (cathode ray tube). In some implementations, a display device may include, for example, an LCD (liquid crystal display). A display device (e.g., monitor) may, for example, be used for displaying information to the user. Some implementations may, for example, include a keyboard and/or pointing device (e.g., mouse, trackpad, trackball, joystick), such as by which the user can provide input to the computer.

In various implementations, the system may communicate using suitable communication methods, equipment, and techniques. For example, the system may communicate with compatible devices (e.g., devices capable of transferring data to and/or from the system) using point-to-point communication in which a message is transported directly from the source to the receiver over a dedicated physical link (e.g., fiber optic link, point-to-point wiring, daisy-chain). The components of the system may exchange information by any form or medium of analog or digital data communication, including packet-based messages on a communication network. Examples of communication networks include, e.g., a LAN (local area network), a WAN (wide area network), MAN (metropolitan area network), wireless and/or optical networks, the computers and networks forming the Internet, or some combination thereof. Other implementations may transport messages by broadcasting to all or substantially all devices that are coupled together by a communication network, for example, by using omni-directional radio frequency (RF) signals. Still other implementations may transport messages characterized by high directivity, such as RF signals transmitted using directional (i.e., narrow beam) antennas or infrared signals that may optionally be used with focusing optics. Still other implementations are possible using appropriate interfaces and protocols such as, by way of example and not intended to be limiting, USB 2.0, Firewire, ATA/IDE, RS-232, RS-422, RS-485, 802.11 a/b/g, Wi-Fi, Ethernet, IrDA, FDDI (fiber distributed data interface), token-ring networks, multiplexing techniques based on frequency, time, or code division, or some combination thereof. Some implementations may optionally incorporate features such as error checking and correction (ECC) for data integrity, or security measures, such as encryption (e.g., WEP) and password protection.

In various embodiments, the computer system may include Internet of Things (IoT) devices. IoT devices may include objects embedded with electronics, software, sensors, actuators, and network connectivity which enable these objects to collect and exchange data. IoT devices may be in-use with wired or wireless devices by sending data through an interface to another device. IoT devices may collect useful data and then autonomously flow the data between other devices.

Various examples of modules may be implemented using circuitry, including various electronic hardware. By way of example and not limitation, the hardware may include transistors, resistors, capacitors, switches, integrated circuits, other modules, or some combination thereof. In various examples, the modules may include analog logic, digital logic, discrete components, traces and/or memory circuits fabricated on a silicon substrate including various integrated circuits (e.g., FPGAs, ASICs), or some combination thereof. In some embodiments, the module(s) may involve execution of preprogrammed instructions, software executed by a processor, or some combination thereof. For example, various modules may involve both hardware and software.

In an illustrative aspect, a volume measurement system may include at least one three-dimensional time-of-flight sensor (3D ToF sensor) (240) configured to measure a distance from each of the at least one 3D ToF sensor to a 3D surface of objects. The volume measurement system may include a data store (215) that may include a program of instructions (160, 165, 170, 175), a set of user-defined parameters (220) that may include a region of interest for measuring the volume of objects, and a set of predetermined fill level warning criterion that may include a volumetric criterion, a height criterion, and a count criterion, and a set of computer-generated parameters (250) that may include a temporal distribution of measurement attributes associated with the region of interest.

The volume measurement system may include a processor (205) operably coupled to the at least one 3D ToF sensor and the data store . For example, when the processor executes the program of instructions, the processor causes operations to be performed to automatically generate a set of error compensated volume metrics (ECVM).

For example, the operations may include generating a 3D point cloud as a function of signals received from each of the at least one 3D ToF sensor. For example, the operations may include applying the 3D point cloud to an error compensation model (255) may include the set of user-defined parameters and the set of computer-generated parameters to generate a set of measurement attributes. For example, the operations may include generating the set of ECVM may include a fill level measurement, a height measurement, and a total count of items within the region of interest as a function of the measurement attributes. For example, the operations may include generating an output signal based on a comparison between the set of ECVM and the set of predetermined fill level warning criterion. For example, errors may include occlusion of objects from the at least one 3D ToF sensor are actively compensated.

The volume measurement system of claim 1, wherein the operations may include receive a user input defining subregions of interest of the region of interest. For example, the operations may include divide the region of interest into the subregions of interest. For example, the operations may include generate a set of ECVM for each of the subregions of interest.

For example, the error compensation model may include identify, in the 3D point cloud, data points that are not in the region of interest. For example, the error compensation model may include remove the identified data points from the 3D point cloud.

For example, the error compensation model may include a minimum gap size criterion. For example, a gap between two objects is ignored when the gap is smaller than the minimum gap size criterion.

For example, the error compensation model may include a curve smoothing function to compensate object surfaces occluded from the at least one 3D ToF sensor.

For example, the error compensation model may include temporarily removes moving object that temporarily occludes the at least one 3D ToF sensor during an active fill. For example, the error compensation model may include generate the set of measurement attributes based at least on the temporal distribution of measurement attributes. For example, the set of predetermined fill level warning criterion may include a volumetric criterion, a height criterion, and a count criterion.

A volume measurement system may include a distance sensor (240) configured to configured to measure a distance from the distance sensor to a 3D surface of objects. The volume measurement system may include a data store (215) may include a program of instructions (160, 165, 170, 175), a set of user-defined parameters (220) that may include a region of interest for measuring a volume of the objects, and a set of computer-generated parameters (250) that may include temporal distribution of measurement attributes associated with the region of interest.

For example, the volume measurement system may include a processor (205) operably coupled to the distance sensor and the data store. For example, when the processor executes the program of instructions, the processor may cause operations to be performed to automatically generate a set of error compensated volume metrics (ECVM).

For example, the operations may include generate a 3D profile as a function of signals received from each of the distance sensor. For example, the operations may include apply the 3D profile to an error compensation model (255) may include the set of user-defined parameters and the set of computer-generated parameters to generate a set of measurement attributes. For example, the operations may include generate the set of ECVM as a function of the measurement attributes. For example, measurement errors may include occlusion of objects from the distance sensor are actively compensated.

For example, the operations may include receive a user input defining subregions of interest of the region of interest. For example, the operations may include divide the region of interest into the subregions of interest. For example, the operations may include generate a set of ECVM for each of the subregions of interest.

For example, the distance sensor may include a 3D time-of-flight (ToF) sensor. For example, the 3D profile may include a point cloud. For example, the objects may include discrete objects. For example, the set of ECVM may include a fill level measurement, a height measurement, and a total count of items within the region of interest.

For example, the error compensation model may include identify, in the 3D profile, data points that are not in the region of interest. For example, the error compensation model may include remove the identified data points from the 3D profile.

For example, the error compensation model may include a minimum gap size criterion. For example, a gap between two objects is ignored when the gap is smaller than the minimum gap size criterion.

For example, the error compensation model may include a high dynamic range compensation method. For example, the error compensation model may include a curve smoothing function to compensate object surfaces occluded from the at least one distance sensor.

For example, the error compensation model may include temporarily remove moving object that temporarily occludes the at least one distance sensor during an active fill. For example, the error compensation model may include generate the set of measurement attributes based at least on the temporal distribution of measurement attributes.

For example, the set of user-defined parameters may include a set of predetermined fill level warning criterion, and the operations may include compare the set of ECVM to the set of predetermined fill level warning criterion. For example, the operations may include generate an output signal when the predetermined fill level warning criterion is met by the set of ECVM.

In an illustrative aspect, a computer program product (CPP) may include a program of instructions tangibly embodied on a non-transitory computer readable medium wherein, when the instructions are executed on a processor (205). For example, the processor causes volume measurement operations to be performed to automatically generate a set of error compensated volume metrics of objects, the operations may include retrieve a set of user-defined parameters may include a region of interest for measuring the volume of the objects, and a set of predetermined fill level warning criterion that may include a volumetric criterion, a height criterion, and a count criterion, and a set of computer-generated parameters may include a temporal distribution of measurement attributes associated with the region of interest (420). The operations may include receive distance measurement signals from at least one 3D ToF camera (405). The operations may include generate a 3D point cloud as a function of the received distance measurement signals (415)

The operations may include, for example, apply the 3D point cloud to an error compensation model may include the set of user-defined parameters and the set of computer-generated parameters to generate a set of measurement attributes (430). The operations may include, for example, generate a set of error compensated volume metrics may include a fill level measurement, a height measurement, and a total count of items within the region of interest as a function of the measurement attributes (435). The operations may include, for example, generate an output signal based on a comparison between the set of error compensated volume metrics and the set of predetermined fill level warning criterion. For example, errors may include occlusion of objects from the at least one 3D ToF camera are actively compensated (450).

## Claims

1. A volume measurement system comprising:
a distance sensor (240) configured to measure a distance from the distance sensor to a three-dimensional, 3D, surface of objects, wherein the distance sensor is a 3D ToF sensor;
a data store (215) comprising a program of instructions (160, 165, 170, 175), a set of user-defined parameters (220) comprising a region of interest for measuring a volume of the objects, and a set of computer-generated parameters (250) comprising temporal distribution of measurement attributes associated with the region of interest; wherein the region of interest comprises a range of a working volume of the distance sensor as a function of user inputs and the measurement attributes correspond to at least one of: a volumetric fill of a space defined by the region of interest, a height of the objects, and an estimated count of the objects in the space;
a processor (205) operably coupled to the distance sensor and the data store such that, when the processor executes the program of instructions, the processor causes operations to be performed to automatically generate a set of error compensated volume metrics, ECVM, the operations comprising,
generate a 3D profile as a function of measured distances received from the distance sensor; and,
apply the 3D profile to an error compensation model (255) comprising the set of user-defined parameters and the temporal distribution of measurement attributes of the set of computer-generated parameters to generate a set of measurement attributes, wherein the error compensation model is configured to retrieve said temporal distribution of the measurement attributes, TDA, for the user-defined region of interest, ROI, such that errors comprising occlusion of the distance sensor by at least one of the objects are actively compensated;
generate the set of error compensated volume metrics, ECVM, comprising at least one of a fill level measurement, a height measurement, and a total count of items within the region of interest from the set of measurement attributes generated from the compensation model; and,
store the error compensated volume metrics.

2. The volume measurement system of claim 1, wherein the data store (215) comprises a set of predetermined fill level warning criteria (220) comprising a volumetric criterion, a height criterion, and a count criterion,
wherein the error compensation model is configured to compensate for errors induced by occlusion of objects from the distance sensor by retrieving said temporal distribution of the measurement attributes, TDA, for the user-defined region of interest, ROI, such that errors induced by an object occluding part or all of another object from the distance sensor are actively accounted for;
generate an output signal based on a comparison between the set of error compensated volume metrics, ECVM, and the set of the predetermined fill level warning criteria, wherein the fill level measurement is compared to the volumetric criterion, the height measurement is compared to the height criterion, and the total count of items is compared to the count criterion; and,
generate signals based on the criteria and output the signals.

3. The volume measurement system of claim 1 or claim 2, wherein the operations further comprise:
receive a user input defining subregions of interest of the region of interest;
divide the region of interest into the subregions of interest; and,
generate a set of ECVM for each of the subregions of interest.

4. The volume measurement system of claim 1, wherein the 3D profile comprises a point cloud.

5. The volume measurement system of claim 1, wherein the objects comprise discrete objects.

6. The volume measurement system of claim 1, wherein the set of ECVM comprises a fill level measurement, a height measurement, and a total count of items within the region of interest.

7. The volume measurement system of claim 1 or claim 2, wherein the error compensation model comprises:
identify, in the 3D profile, data points that are not in the region of interest; and,
remove the identified data points from the 3D profile.

8. The volume measurement system of claim 1 or claim 2, wherein the error compensation model comprises a minimum gap size criterion, such that a gap between two objects is ignored when the gap is smaller than the minimum gap size criterion.

9. The volume measurement system of claim 1, wherein the error compensation model comprises a high dynamic range compensation method.

10. The volume measurement system of claim 1 or claim 2, wherein the error compensation model comprises a curve smoothing function to compensate object surfaces occluded from the at least one distance sensor.

11. The volume measurement system of claim 1 or claim 2, wherein the error compensation model comprises:
temporarily remove moving object that temporarily occludes the at least one distance sensor during an active fill, and,
generate the set of measurement attributes based at least on the temporal distribution of measurement attributes.

12. The volume measurement system of claim 1 or claim 2, wherein the set of user-defined parameters comprises a set of predetermined fill level warning criterion, and the operations further comprise:
compare the set of ECVM to the set of predetermined fill level warning criterion; and,
generate an output signal when the predetermined fill level warning criterion is met by the set of ECVM.

13. A computer program product, CPP, comprising a program of instructions tangibly embodied on a non-transitory computer readable medium wherein, when the instructions are executed on a processor (205), the processor causes volume measurement operations to be performed to automatically generate a set of error compensated volume metrics of objects, the operations comprising:
retrieve a set of user-defined parameters comprising a region of interest for measuring the volume of the objects, and a set of predetermined fill level warning criteria comprising a volumetric criterion, a height criterion, and a count criterion, and a set of computer-generated parameters comprising a temporal distribution of measurement attributes associated with the region of interest (420), the region of interest comprises a range of a working volume of at least one 3D ToF sensor as a function of user inputs and the measurement attributes correspond to: a volumetric fill of a space defined by the region of interest, a height of the objects, and an estimated count of the objects in the space;
receive distance measurement signals from the at least one 3D ToF sensor (405);
generate a 3D profile as a function of the distance measurement signals (415) received from the at least one 3D ToF sensor;
apply the 3D profile to an error compensation model comprising the set of user-defined parameters and the set of computer-generated parameters to generate a set of measurement attributes (430), wherein the error compensation model is configured to compensate for errors by retrieving said temporal distribution of the measurement attributes, TDA, for the user-defined region of interest, ROI;
generate a set of error compensated volume metrics, ECVM, comprising a fill level measurement, a height measurement, and a total count of items within the region of interest from the set of measurement attributes (435) generated from the compensation model; and,
generate an output signal based on a comparison between the set of error compensated volume metrics, ECVM, and the set of the predetermined fill level warning criteria, wherein the fill level measurement is compared to the volumetric criterion, the height measurement is compared to the height criterion, and the total count of items is compared to the count criterion (450); and,
output the output signal generated based on the set of the predetermined fill level warning criteria.

## Patentansprüche

1. Volumenmesssystem, aufweisend:
einen Abstandssensor (240), ausgebildet zum Messen eines Abstands von dem Abstandssensor zu einer dreidimensionalen, 3D, Oberfläche von Objekten, wobei der Abstandssensor ein 3D-ToF-Sensor ist;
einen Datenspeicher (215), der ein Programm mit Anweisungen (160, 165, 170, 175), einen Satz benutzerdefinierter Parameter (220), der einen Bereich von Interesse zum Messen eines Volumens der Objekte aufweist, und einen Satz computergenerierter Parameter (250), der eine zeitliche Verteilung von Messattributen aufweist, die dem Bereich von Interesse zugehörig sind, aufweist; wobei der Bereich von Interesse einen Bereich eines Arbeitsvolumens des Abstandssensors als Funktion von Benutzereingaben beinhaltet und die Messattribute mindestens einem der folgenden Elemente entsprechen: einer volumetrischen Füllung eines durch den Bereich von Interesse definierten Raums, einer Höhe der Objekte und einer geschätzten Anzahl der Objekte in dem Raum;
einen Prozessor (205), der betriebsfähig mit dem Abstandssensor und dem Datenspeicher gekoppelt ist, so dass der Prozessor, wenn der Prozessor das Programm mit Anweisungen ausführt, bewirkt, dass Operationen ausgeführt werden, um automatisch einen Satz von fehlerkompensierten Volumenmetriken, ECVM, zu erzeugen, wobei die Operationen beinhalten:
Erzeugen eines 3D-Profils als Funktion von gemessenen Abständen, die von dem Abstandssensor empfangen werden; und
Anwenden des 3D-Profils auf ein Fehlerkompensationsmodell (255), das den Satz benutzerdefinierter Parameter und die zeitliche Verteilung von Messattributen des Satzes computergenerierter Parameter beinhaltet, um einen Satz von Messattributen zu erzeugen, wobei das Fehlerkompensationsmodell ausgebildet ist, die zeitliche Verteilung der Messattribute, TDA, für den benutzerdefinierten Bereich von Interesse, ROI, abzurufen, so dass Fehler, die eine Verdeckung des Abstandssensors durch mindestens eines der Objekte beinhalten, aktiv kompensiert werden;
Erzeugen des Satzes von fehlerkompensierten Volumenmetriken, ECVM, der mindestens eines der folgenden Elemente beinhaltet: eine Füllstandsmessung, eine Höhenmessung und eine Gesamtanzahl von Elementen innerhalb des Bereichs von Interesse, aus dem Satz von Messattributen, der aus dem Kompensationsmodell erzeugt wurde; und
Speichern der fehlerkompensierten Volumenmetriken.

2. Volumenmesssystem nach Anspruch 1,
wobei der Datenspeicher (215) einen Satz vorbestimmter Füllstands-Warnkriterien (220) aufweist, die ein Volumenkriterium, ein Höhenkriterium und ein Anzahlkriterium beinhalten,
wobei das Fehlerkompensationsmodell ausgebildet ist, um Fehler zu kompensieren, die durch die Verdeckung von Objekten vor dem Abstandssensor verursacht werden, indem es die zeitliche Verteilung der Messattribute, TDA, für den benutzerdefinierten Bereich von Interesse, ROI, abruft, so dass Fehler, die durch ein Objekt verursacht werden, das ein anderes Objekt teilweise oder ganz vor dem Abstandssensor verdeckt, aktiv berücksichtigt werden;
um ein Ausgangssignal basierend auf einem Vergleich zwischen dem Satz fehlerkompensierter Volumenmetriken, ECVM, und dem Satz der vorbestimmten Füllstands-Warnkriterien zu erzeugen, wobei die Füllstandsmessung mit dem Volumenkriterium verglichen wird, die Höhenmessung mit dem Höhenkriterium verglichen wird und die Gesamtanzahl von Elementen mit dem Anzahlkriterium verglichen wird; und
um Signale basierend auf den Kriterien zu erzeugen und die Signale auszugeben.

3. Volumenmesssystem nach Anspruch 1 oder Anspruch 2, wobei die Operationen zudem beinhalten:
Empfangen einer Benutzereingabe, die Teilbereiche von Interesse des Bereichs von Interesse definiert;
Aufteilen des Bereichs von Interesse in die Teilbereiche von Interesse; und
Erzeugen eines Satzes von ECVM für jeden der Teilbereiche von Interesse.

4. Volumenmesssystem nach Anspruch 1, wobei das 3D-Profil eine Punktwolke aufweist.

5. Volumenmesssystem nach Anspruch 1, wobei die Objekte diskrete Objekte aufweisen.

6. Volumenmesssystem nach Anspruch 1, wobei der Satz von ECVM eine Füllstandsmessung, eine Höhenmessung und eine Gesamtanzahl von Elementen innerhalb des Bereichs von Interesse beinhaltet.

7. Volumenmesssystem nach Anspruch 1 oder Anspruch 2, wobei das Fehlerkompensationsmodell aufweist:
Identifizieren von Datenpunkten in dem 3D-Profil, die nicht in dem Bereich von Interesse sind; und
Entfernen der identifizierten Datenpunkte aus dem 3D-Profil.

8. Volumenmesssystem nach Anspruch 1 oder Anspruch 2, wobei das Fehlerkompensationsmodell ein Kriterium für eine minimale Lückengröße beinhaltet, sodass eine Lücke zwischen zwei Objekten ignoriert wird, wenn die Lücke kleiner als das Kriterium für die minimale Lückengröße ist.

9. Volumenmesssystem nach Anspruch 1, wobei das Fehlerkompensationsmodell ein Kompensationsverfahren mit hohem Dynamikbereich beinhaltet.

10. Volumenmesssystem nach Anspruch 1 oder Anspruch 2, wobei das Fehlerkompensationsmodell eine Kurvenglättungsfunktion beinhaltet, um Objektflächen zu kompensieren, die vor dem mindestens einen Abstandssensor verdeckt sind.

11. Volumenmesssystem nach Anspruch 1 oder Anspruch 2, wobei das Fehlerkompensationsmodell aufweist:
vorübergehendes Entfernen eines sich bewegenden Objekts, das den mindestens einen Abstandssensor während einer aktiven Füllung vorübergehend verdeckt, und
Erzeugen des Satzes von Messattributen zumindest basierend auf der zeitlichen Verteilung der Messattribute.

12. Volumenmesssystem nach Anspruch 1 oder Anspruch 2, wobei der Satz benutzerdefinierter Parameter einen Satz vorbestimmter Füllstands-Warnkriterien aufweist und die Operationen zudem beinhalten:
Vergleichen des Satzes von ECVM mit dem Satz vorbestimmter Füllstands-Warnkriterien; und
Erzeugen eines Ausgangssignals, wenn die vorbestimmten Füllstands-Warnkriterien durch den Satz von ECVM erfüllt sind.

13. Computerprogrammprodukt, CPP, das ein Programm mit Anweisungen aufweist, verkörpert auf einem nicht-transitorischen, computerlesbaren Medium, wobei, wenn die Anweisungen auf einem Prozessor (205) ausgeführt werden, der Prozessor bewirkt, dass Volumenmess-Operationen ausgeführt werden, um automatisch einen Satz fehlerkompensierter Volumenmetriken von Objekten zu erzeugen, wobei die Operationen beinhalten:
Abrufen eines Satzes benutzerdefinierter Parameter, der einen Bereich von Interesse zum Messen des Volumens der Objekte beinhaltet, und eines Satzes vorbestimmter Füllstands-Warnkriterien, der ein Volumenkriterium, ein Höhenkriterium und ein Anzahlkriterium beinhaltet, und eines Satzes computergenerierter Parameter, der eine zeitliche Verteilung von Messattributen aufweist, die dem Bereich von Interesse (420) zugehörig sind, wobei der Bereich von Interesse einen Bereich eines Arbeitsvolumens von mindestens einem 3D-ToF-Sensor als Funktion von Benutzereingaben beinhaltet, und die Messattribute einer volumetrischen Füllung eines durch den Bereich von Interesse definierten Raums, einer Höhe der Objekte und einer geschätzten Anzahl der Objekte in dem Raum entsprechen;
Empfangen von Abstandsmesssignalen von dem mindestens einen 3D-ToF-Sensor (405);
Erzeugen eines 3D-Profils als Funktion der von dem mindestens einen 3D-ToF-Sensor empfangenen Abstandsmesssignale (415);
Anwenden des 3D-Profils auf ein Fehlerkompensationsmodell, das den Satz benutzerdefinierter Parameter und den Satz computergenerierter Parameter beinhaltet, um einen Satz von Messattributen (430) zu erzeugen, wobei das Fehlerkompensationsmodell ausgebildet ist, Fehler zu kompensieren, indem es die zeitliche Verteilung der Messattribute, TDA, für den benutzerdefinierten Bereich von Interesse, ROI, abruft;
Erzeugen eines Satzes von fehlerkompensierten Volumenmetriken, ECVM, der eine Füllstandsmessung, eine Höhenmessung und eine Gesamtanzahl von Elementen innerhalb des Bereichs von Interesse beinhaltet, aus dem Satz von Messattributen (435), der aus dem Kompensationsmodell erzeugt wurde; und
Erzeugen eines Ausgangssignals basierend auf einem Vergleich zwischen dem Satz von fehlerkompensierten Volumenmetriken, ECVM, und dem Satz vorbestimmter Füllstands-Warnkriterien, wobei die Füllstandsmessung mit dem Volumenkriterium verglichen wird, die Höhenmessung mit dem Höhenkriterium verglichen wird und die Gesamtanzahl von Elementen mit dem Anzahlkriterium verglichen wird (450); und
Ausgeben des basierend auf dem Satz der vorbestimmten Füllstands-Warnkriterien erzeugten Ausgangssignals.

## Revendications

1. Système de mesure de volume comprenant :
un capteur de distance (240) configuré pour mesurer une distance entre le capteur de distance et une surface tridimensionnelle, 3D, d'objets dans lequel le capteur de distance est un capteur ToF 3D ;
une mémoire de données (215) comprenant un programme d'instructions (160, 165, 170, 175), un ensemble de paramètres (220) définis par un utilisateur comprenant une région d'intérêt pour mesurer un volume des objets, et un ensemble de paramètres générés par ordinateur (250) comprenant une distribution temporelle d'attributs de mesure associés à la région d'intérêt ; dans lequel la région d'intérêt comprend une plage d'un volume de travail du capteur de distance en fonction de des entrées d'un utilisateur et les attributs de mesure correspondent à au moins l'un des éléments suivants : un remplissage volumétrique d'un espace défini par la région d'intérêt, une hauteur des objets et un nombre estimé d'objets dans l'espace ;
un processeur (205) couplé de manière opérationnelle au capteur de distance et à la mémoire de données de telle sorte que, lorsque le processeur exécute le programme d'instructions, le processeur provoque l'exécution d'opérations pour générer automatiquement un ensemble de mesures de volume compensées en erreur, ECVM, les opérations comprenant
générer un profil 3D en fonction de des distances mesurées reçues du capteur de distance ; et
appliquer le profil 3D à un modèle de compensation d'erreur (255) comprenant l'ensemble de paramètres définis par un utilisateur et la distribution temporelle d'attributs de mesure de l'ensemble de paramètres générés par ordinateur afin de générer un ensemble d'attributs de mesure, dans lequel le modèle de compensation d'erreur est configuré pour récupérer ladite distribution temporelle des attributs de mesure, TDA, pour la région d'intérêt définie par un utilisateur, ROI, de telle sorte que des erreurs comprenant l'occultation du capteur de distance par au moins un des objets soient activement compensées ;
générer l'ensemble de mesures de volume compensées en erreur, ECVM, comprenant au moins l'un parmi une mesure de niveau de remplissage, une mesure de hauteur et un comptage total d'éléments dans la région d'intérêt à partir de l'ensemble d'attributs de mesure généré à partir du modèle de compensation ; et
stocker les mesures de volume compensées en erreur.

2. Système de mesure de volume selon la revendication 1,
dans lequel la mémoire de données (215) comprend un ensemble de critères d'alerte de niveau de remplissage prédéterminés (220) comprenant un critère volumétrique, un critère de hauteur et un critère de comptage,
dans lequel le modèle de compensation d'erreur est configuré pour compenser des erreurs induites par l'occultation d'objets par rapport au capteur de distance en récupérant ladite distribution temporelle des attributs de mesure, TDA, pour la région d'intérêt définie par un utilisateur, ROI, de telle sorte que des erreurs induites par un objet occultant une partie ou la totalité d'un autre objet par rapport au capteur de distance soient activement prises en compte ;
générer un signal de sortie basé sur une comparaison entre l'ensemble de mesures de volume compensées en erreur, ECVM, et l'ensemble de critères d'alerte de niveau de remplissage prédéterminés, dans lequel la mesure de niveau de remplissage est comparée au critère volumétrique, la mesure de hauteur est comparée au critère de hauteur et le comptage total d'éléments est comparé au critère de comptage ; et
générer des signaux basés sur les critères et émettre les signaux.

3. Système de mesure de volume selon la revendication 1 ou la revendication 2, dans lequel les opérations comprennent en outre :
recevoir une entrée utilisateur définissant des sous-régions d'intérêt de la région d'intérêt ;
diviser la région d'intérêt en les sous-régions d'intérêt ; et
générer un ensemble d'ECVM pour chacune des sous-régions d'intérêt.

4. Système de mesure de volume selon la revendication 1, dans lequel le profil 3D comprend un nuage de points.

5. Système de mesure de volume selon la revendication 1, dans lequel les objets comprennent des objets discrets.

6. Système de mesure de volume selon la revendication 1, dans lequel l'ensemble d'ECVM comprend une mesure de niveau de remplissage, une mesure de hauteur et un comptage total d'éléments dans la région d'intérêt.

7. Système de mesure de volume selon la revendication 1 ou la revendication 2, dans lequel le modèle de compensation d'erreur comprend :
identifier, dans le profil 3D, des points de données qui ne se trouvent pas dans la région d'intérêt ; et
supprimer les points de données identifiés du profil 3D.

8. Système de mesure de volume selon la revendication 1 ou la revendication 2, dans lequel le modèle de compensation d'erreur comprend un critère de taille minimale d'écart, de telle sorte qu'un écart entre deux objets est ignoré lorsque l'écart est inférieur au critère de taille minimale d'écart.

9. Système de mesure de volume selon la revendication 1, dans lequel le modèle de compensation d'erreur comprend une méthode de compensation à plage dynamique élevée.

10. Système de mesure de volume selon la revendication 1 ou la revendication 2, dans lequel le modèle de compensation d'erreur comprend une fonction de lissage de courbe pour compenser des surfaces d'objets occultées par rapport à l'moins un capteur de distance.

11. Système de mesure de volume selon la revendication 1 ou la revendication 2, dans lequel le modèle de compensation d'erreur comprend :
supprimer temporairement un objet en mouvement qui occulte temporairement l'au moins un capteur de distance pendant un remplissage actif, et
générer l'ensemble d'attributs de mesure basé sur au moins la distribution temporelle d'attributs de mesure.

12. Système de mesure de volume selon la revendication 1 ou la revendication 2, dans lequel l'ensemble de paramètres définis par un utilisateur comprend un ensemble de critères d'alerte de niveau de remplissage prédéterminés, et les opérations comprennent en outre :
comparer l'ensemble d'ECVM à l'ensemble de critères d'alerte de niveau de remplissage prédéterminés ; et
générer un signal de sortie lorsque l'ensemble d'ECVM satisfait aux critères d'alerte de niveau de remplissage prédéterminés.

13. Produit logiciel, CPP, comprenant un programme d'instructions incorporé sur un support non transitoire lisible par ordinateur, dans lequel, lorsque les instructions sont exécutées sur un processeur (205), le processeur provoque l'exécution d'opérations de mesure de volume afin de générer automatiquement un ensemble de mesures de volume compensées en erreur d'objets, les opérations comprenant :
récupérer un ensemble de paramètres définis par un utilisateur comprenant une région d'intérêt pour mesurer le volume des objets, et un ensemble de critères d'alerte de niveau de remplissage prédéterminés comprenant un critère volumétrique, un critère de hauteur et un critère de comptage, et un ensemble de paramètres générés par ordinateur comprenant une distribution temporelle d'attributs de mesure associés à la région d'intérêt (420), la région d'intérêt comprend une plage d'un volume de travail d'au moins un capteur ToF 3D en fonction de des entrées d'un utilisateur et les attributs de mesure correspondent à : un remplissage volumétrique d'un espace défini par la région d'intérêt, une hauteur des objets et un nombre estimé d'objets dans l'espace ;
recevoir des signaux de mesure de distance provenant de l'au moins un capteur ToF 3D (405) ;
générer un profil 3D en fonction des signaux de mesure de distance (415) reçus de l'au moins un capteur ToF 3D ;
appliquer le profil 3D à un modèle de compensation d'erreur comprenant l'ensemble de paramètres définis par un utilisateur et l'ensemble de paramètres générés par ordinateur afin de générer un ensemble d'attributs de mesure (430), dans lequel le modèle de compensation d'erreur est configuré pour compenser des erreurs en récupérant ladite distribution temporelle des attributs de mesure, TDA, pour la région d'intérêt définie par un utilisateur, ROI ;
générer un ensemble de mesures de volume compensées en erreur, ECVM, comprenant une mesure de niveau de remplissage, une mesure de hauteur et un comptage total d'éléments dans la région d'intérêt à partir de l'ensemble d'attributs de mesure (435) généré à partir du modèle de compensation ; et
générer un signal de sortie basé sur une comparaison entre l'ensemble de mesures de volume compensées en erreur, ECVM, et l'ensemble de critères d'alerte de niveau de remplissage prédéterminés, dans lequel la mesure de niveau de remplissage est comparée au critère volumétrique, la mesure de hauteur est comparée au critère de hauteur, et le comptage total d'éléments est comparé au critère de comptage (450) ; et
émettre le signal de sortie généré basé sur l'ensemble de critères d'alerte de niveau de remplissage prédéterminés.
